(19) Europäisches Patentamt
European Patent Office
Office européen des brevets

(11) EP 1 661 690 A1

(12) **EUROPEAN PATENT APPLICATION**
published in accordance with Art. 158(3) EPC

(43) Date of publication:
**31.05.2006 Bulletin 2006/22**

(21) Application number: **04771728.5**

(22) Date of filing: **17.08.2004**

(51) Int Cl.:
***B29C 67/00*** *(1985.01)*

(86) International application number:
**PCT/JP2004/011767**

(87) International publication number:
**WO 2005/021248 (10.03.2005 Gazette 2005/10)**

(84) Designated Contracting States:
**AT BE BG CH CY CZ DE DK EE ES FI FR GB GR HU IE IT LI LU MC NL PL PT RO SE SI SK TR**

(30) Priority: **27.08.2003 JP 2003303126**
**02.09.2003 JP 2003310465**
**18.09.2003 JP 2003326286**
**22.09.2003 JP 2003330132**

(71) Applicant: **FUJI PHOTO FILM CO., LTD.**
**Minamiashigara-shi, Kanagawa-ken 250-0193 (JP)**

(72) Inventor: **SANO, Shojiro**
**Fujinomiya-shi, Shizuoka 4188666 (JP)**

(74) Representative: **HOFFMANN EITLE**
**Patent- und Rechtsanwälte**
**Arabellastraße 4**
**D-81925 München (DE)**

(54) **METHOD OF PRODUCING THREE-DIMENSIONAL MODEL**

(57) The present invention relates to a process for producing a three-dimensional model in which a binder has good discharge properties and curability. The process for producing a three-dimensional model is a process for producing a three-dimensional model that includes a step (layer formation step) of forming above a support a layer of a powder material, the layer having a predetermined thickness, a step (cross-sectional shape formation step) of imagewise bonding the powder material layer by a binder according to sliced cross-sectional data of a modeled object so as to give a cross-sectional shape, and sequentially repeating the above steps, the binder having a viscosity at 25°C of 5 to 100 mPa·s.

*FIG.1*

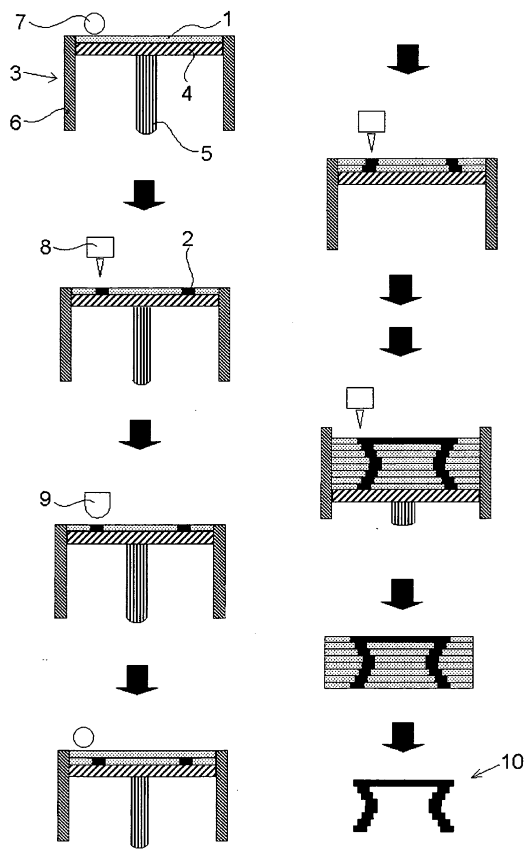


EP 1 661 690 A1

## Description

The present invention relates to a process for producing a three-dimensional model and, in particular, to a process for producing a three-dimensional model by sequentially layering a plurality of sliced cross-sectional shapes of a three-dimensional model of an object.

There is a conventionally known technique to form a model, which is a three-dimensional model of a solid modeled object, by imagewise bonding with a binder a thin powder layer for each of a plurality of sliced cross-sectional shapes of the modeled object, and sequentially layering these bonded thin cross-sectional shaped layers.

Such a technique is known as rapid prototyping and can be utilized in applications such as component prototyping and design verification. Recently, a system employing an inkjet method, which is inexpensive, fast, and suitable for the formation of a color model, has been proposed and disclosed in, for example, Japanese registered patent No. 2729110. A specific procedure for this three-dimensional modeling is explained below.

Firstly, a thin layer of a powder is spread above a flat surface by means of a blade mechanism so as to have a uniform thickness, and an inkjet nozzle head is made to scan and discharge a binder onto the surface of the thin powder layer according to a cross-sectional shape based on cross-sectional data of the modeled object. The powder material in the region where the binder has been discharged is subjected to an operation necessary to put it into a bonded state and also to bond it to the cross-sectional shape of a lower layer that has already been formed. These steps of sequentially forming a thin powder layer at the top and discharging the binder are repeated until the whole model is completed. Finally, powder in a region to which no binder has been applied can be removed easily when taking out the model from the equipment and the target model can be separated because the powder particles are separate and not bonded to each other. In accordance with the above-mentioned operations, a desired three-dimensional model can be produced.

Furthermore, a production process employing a similar method, in which binders are colored with yellow (Y), magenta (M), and cyan (C), thus giving a colored three-dimensional model, has been disclosed in, for example, JP-A-2001-150556 (JP-A denotes a Japanese unexamined patent application publication).

However, in the present situation the above-mentioned method cannot achieve a satisfactory level of properties (texture, color) for a model when compared with that which is desired. In particular, it is thought that a three-dimensional model for which transparency is required cannot be obtained by the conventional method because of the difference in properties between the powder and the binder. Furthermore, in order to impart smoothness to the surface, it is necessary to carry out overcoating and polishing manually, which requires time and expense.

Moreover, it is generally difficult to reliably draw a desired pattern, etc. on a predetermined position of a three-dimensional model by hand painting.

Since a three-dimensional model immediately after forming is shaped only by virtue of the bonding force of the binder, the three-dimensional model has a low strength and, depending on the way it is handled, might be broken. Conventionally, therefore, after forming the three-dimensional model it is impregnated with a resin, a wax, etc. between the powder particles in order to increase the strength. However, such a step requires time and effort.

Furthermore, a conventionally used binder has the problem that it causes clogging of an inkjet nozzle.

Moreover, although the binder is discharged according to the cross-sectional shape based on the sliced cross-sectional data of the modeled object, there is the problem that this is accompanied by a change in volume due to bonding. This change in volume results in a decrease in dimensional precision, thus making it difficult to obtain a desired three-dimensional model. Furthermore, the change in volume affects the mechanical properties or the bonding properties and, in general, a large volume change causes internal stress, thus degrading the strength.

In addition to the above-mentioned problems, adding a dye for coloring might give rise to the problem of the curability of the model deteriorating, the model becoming tacky, or the texture being degraded.

An object of the present invention is to provide a process for producing a three-dimensional model having good discharge properties and excellent curability.

It is another object of the present invention to provide a three-dimensional modeling technique that enables a target three-dimensional model to be produced faithfully in terms of not only shape but also color. Yet another object of the present invention is to produce with good dimensional precision a colored three-dimensional model having high mechanical strength in a short time and at low cost.

The above-mentioned objects of the present invention can be attained by the following means (1). This is listed below together with preferred embodiments.

(1) A process for producing a three-dimensional model, the process comprising a step (layer formation step) of forming above a support a layer of a powder material, the layer having a predetermined thickness, a step (cross-sectional shape formation step) of imagewise bonding the powder material layer by a binder according to sliced cross-sectional data of a modeled object so as to give a cross-sectional shape, and sequentially repeating the above steps, the binder having a viscosity at 25°C of 5 to 100 mPa·s,

(2) the process for producing a three-dimensional model according to (1), wherein the binder has a percentage volume shrinkage during curing of equal to or less than 15%,

(3) the process for producing a three-dimensional model according to either (1) or (2), wherein the binder and/or the powder material comprises an acylphosphine oxide compound,

(4) the process for producing a three-dimensional model according to any one of (1) to (3), wherein the binder, which is colored, comprises a polymerizable compound and an oil-soluble dye,

(5) the process for producing a three-dimensional model according to any one of (1) to (4), wherein the binder is cured by the application of energy,

(6) the process for producing a three-dimensional model according to any one of (1) to (5), wherein the binder is cured by the application of light energy,

(7) the process for producing a three-dimensional model according to any one of (1) to (6), wherein the oil-soluble dye has an oxidation potential of equal to or greater than 1.0 V (SCE),

(8) the process for producing a three-dimensional model according to any one of (1) to (7), wherein the binder employs two or more types of binders selected from the group consisting of at least one colored binder, a white-colored binder, and a colorless binder,

(9) the process for producing a three-dimensional model according to any one of (1) to (8), wherein the colored binder comprises at least two binders selected from the group consisting of a yellow binder, a magenta binder, a cyan binder, and a black binder,

(10) the process for producing a three-dimensional model according to any one of (1) to (9), wherein the binder comprises a monofunctional acrylate and/or a difunctional acrylate,

(11) the process for producing a three-dimensional model according to any one of (1) to (10), wherein the binder comprises (a) at least one type of tri- or higher-functional (meth)acrylate, and (b) at least one type of monofunctional and/or difunctional (meth)acrylate,

(12) the process for producing a three-dimensional model according to any one of (11), wherein the tri- or higher-functional (meth)acrylate is tetra-, penta-, or hexa-functional (meth)acrylate,

(13) the process for producing a three-dimensional model according to any one of (1) to (12), wherein the binder comprises an epoxy acrylate and/or a urethane acrylate,

(14) the process for producing a three-dimensional model according to any one of (1) to (13), wherein the binder is cationically polymerizable, and

(15) the process for producing a three-dimensional model according to any one of (1) to (14), wherein as a viscosity adjusting agent for the binder, an organic solvent having a boiling point of no greater than 150°C is used.

Effects of the Invention

In accordance with the present invention, a three-dimensional model can be produced without causing clogging of a printing head nozzle with a binder. Furthermore, in accordance with the production process of the present invention, a three-dimensional model having high dimensional precision, high mechanical strength, a smooth surface, and excellent texture can be produced.

As a result, it becomes possible to produce a high quality three-dimensional model simply, inexpensively, and stably, which has conventionally been impossible.

FIG. 1 A schematic view showing each step of one embodiment of the process for producing a three-dimensional model of the present invention.

FIG. 2 A perspective view showing schematically the cross-sectional shape of several layers formed in the production of the three-dimensional model shown in FIG. 1.

Explanation of Reference Numerals

| | |
|---|---|
| 1 | Thin layer |
| 2 | Region to which binder has been applied |
| 3 | Three-dimensional modeling section |
| 4 | Support (modeling stage) |
| 5 | Vertically moving section |
| 6 | Frame |
| 7 | Blade |
| 8 | Inkjet head |

9 Ultraviolet irradiation section
10 Three-dimensional model

The present invention relates to a process for producing a three-dimensional model, the process comprising sequentially repeating a step (layer formation step) of forming a layer of a powder material above a support, the layer having a predetermined thickness, and a step (cross-sectional shape formation step) of imagewise bonding the powder material layer by a binder based on sliced cross-sectional data of a modeled object so as to give a cross-sectional shape, the viscosity of the binder at 25°C being 5 to 100 mPa·s.
The viscosity of the binder at 25°C is 5 to 100 mPa·s, but it is preferably 5 to 80 mPa·s, and more preferably 10 to 50 mPa·s. A detailed explanation is given later.
Furthermore, in the present invention, the binder is preferably cured by the application of energy, and it is preferable for it to be cured by the application of external light energy.
Moreover, the percentage volume shrinkage during curing is preferably no greater than 15%.
The 'percentage volume shrinkage during curing' referred to here is a value given from the equation below

$$[(D2 - D1) / D2] \times 100$$

where the liquid specific gravity of a binder comprising a polymerizable compound is D1, and the solid specific gravity after curing is D2.
It is known that an addition polymerization reaction of an ethylenically unsaturated double bond is accompanied by shrinkage and, in particular, the percentage volume shrinkage accompanying curing of a monofunctional acrylate or methacrylate can be large.
In contrast, since the percentage volume shrinkage accompanying curing in ring-opening polymerization of a cyclic ether is relatively small, it can be used preferably in the present invention. The volume of some compounds having a plurality of cyclic ether structures per molecule expands accompanying polymerization, and these compounds can also be used in the present invention.
The powder material used in the present invention preferably has an average particle size of 0.1 to 1,000 μm, more preferably 1 to 50 μm, and most preferably 3 to 30 μm. The particle size distribution can be wide, but is preferably narrow. It is preferable for the particle size distribution to be nearly monodisperse, and the coefficient of variation of the particle size distribution is preferably no greater than 20%, and more preferably no greater than 15%. The powder material may be an organic material, an inorganic material, or an inorganic/organic composite material. A detailed explanation is given later.
As the support above which the powder material is laid, a support having any surface profile can be used, but a support having a smooth surface is preferable, and a support having a flat surface may be used preferably. In the production process of the present invention, it is preferable to use a horizontal support having on its perimeter a frame that can be extended to a height greater than that of the three-dimensional model that is to be produced.
With regard to the predetermined thickness for the powder material layer, it is preferably a layer having a slice pitch thickness of 10 to 500 μm, and more preferably 50 to 150 μm. Each time a layer formation step and a colored cross-sectional shape formation step are repeated, the overall thickness of the stack of powder material layers increases by the above-mentioned slice pitch.
The colored cross-sectional shape referred to here means one that has a shape of one of a plurality of sliced cross sections of a modeled object, and that is accompanied by coloring corresponding to the shape. In particular, when the cross-sectional shape is that of an opaque model, the model can be hollow, and in this case it is sufficient to reproduce the shape in the vicinity of the outline thereof. With regard to coloration, color may be reproduced on the surface of the model, and color reproduction of the outline of the shape is important.
A summary of the process for producing a three-dimensional model of the present invention is explained with reference to drawings.
FIG. 1 is a schematic view showing the main steps of one embodiment of the process for producing a three-dimensional model of the present invention.
In the production process of the present invention, a thin layer 1 of a powder material is formed above a support (modeling stage) 4 provided in a three-dimensional modeling section 3. The support 4 is supported by a vertically moving section 5 and its perimeter is surrounded by a frame 6. The thin layer 1 is formed by moving surplus powder material, which is supplied from a powder supply section to the support 4, in a direction X (the left-to-right direction in the plane of the paper) by means of a blade 7 that extends lengthwise in a direction Y (a direction perpendicular to the plane of the paper). A binder is supplied to the top of the thus-formed thin layer 1 of the powder material, via an inkjet head 8 of a binder application section, according to cross-sectional shape data so as to form a region 2 to which the binder has

been applied. In a case where the binder is a two liquid reactive type epoxy resin, etc., these two reactive liquids are supplied from different inkjet nozzles to substantially the same spot, thus forming a region 2 to which the binder has been applied. These two reactive liquids are cured by the application of thermal energy at room temperature, thus bonding the powder material. Moreover, in a case where the binder is an ultraviolet curing binder, this region 2 to which the binder has been applied is cured by exposure to ultraviolet rays from an ultraviolet irradiation section 9, thus bonding the powder material.

Subsequently, the vertically moving section 5 is moved downward by 1 slice pitch, and a new powder material layer is formed.

Binder is supplied to the top of the newly formed thin layer via the inkjet head of the binder application section according to the next adjacent cross-sectional shape data so as to form a new region to which binder has been applied. This region is cured by exposure to ultraviolet rays so as to bond the powder material throughout the thickness of the thin layer in the region 2 to which the binder has been applied, and also to bond it to the cross-sectional shape that is directly below.

After sequentially repeating formation of the powder material thin layer 1, supply of the binder, and curing a required number of times, a three-dimensional model 10 can be obtained by separating the powder material in a region where no binder has been applied.

FIG. 2 is a perspective view showing schematically the cross-sectional shape formed in each of the adjacent layers in the production of the above-mentioned three-dimensional model.

A preferred embodiment of the process for producing a three-dimensional model of the present invention is explained below. The five steps below include a step of forming three-dimensional shape color data and a step of forming colored cross-sectional shape data for each cross section, prior to the (powder) layer formation step and the colored cross-sectional shape formation step.

In a first step, model data representing a three-dimensional modeled object having on its surface a color pattern, etc. are formed in a computer. As model data used as a basis for modeling, color three-dimensional model data formed by general 3D-CAD modeling software can be used. It is also possible to utilize data and texture of a three-dimensional colored shape measured using a three-dimensional shape input device.

In a second step, cross-sectional data for each horizontally sliced cross section of the modeled object are formed in a computer from the above-mentioned model data. A cross-sectional body sliced at a pitch (layer thickness t) corresponding to the thickness of one layer of the layered powder is cut out of the model data, and shape data and coloration data showing a region where the cross section is present are formed as the cross-sectional data. Specifically, data (STL format, etc.) obtained using three-dimensional CAD can be converted into data of a cross section sliced at a thickness of 10 to 500 μm. In the present invention, 'shape data' and 'coloration data' are together also called 'colored (cross sectional) shape data'.

Subsequently, information regarding the layer thickness (slice pitch when forming the cross sectional data) of the powder and the number of layers (the number of sets of colored shape data) when modeling a modeled object is input from the computer into a drive control section of a pattern formation device.

In a third step, supply of a powder material, which is the material for producing the three-dimensional model on the modeling stage, is carried out. The powder material is spread in a uniformly thick layer shape using a powder material counter-rotating mechanism (hereinafter, called a 'counter roller'), and supply of the powder material is stopped when a predetermined amount of powder has been supplied.

'Sequentially repeating the layer formation step and the cross-sectional shape formation step' referred to in the present invention means not only (1) carrying out a step of forming a cross-sectional shape on the whole surface of a new layer after completing a new layer formation step, but also (2) forming a cross-sectional shape in a region of a newly formed layer before formation of the newly formed layer is completed, while still carrying out the new layer formation step. An example of the latter case has been disclosed in JP-A-2002-307562.

A fourth step is a step of forming a colored cross-sectional shape under the control of the drive control section according to the colored shape data for the cross section. This step preferably employs a non-contact method. As a representative example, an inkjet method is explained.

The shape data and the coloration data created in the second step are converted into finely divided grids of bitmap information for each color of C, M, and Y, and an inkjet head is moved within the XY plane. During the movement, an ultraviolet (UV)-curing binder is discharged appropriately from each inkjet discharge nozzle based on the coloration data. With regard to the binder, it is preferable to use two or more types of binders selected from the group consisting of at least one type of colored binder, a white binder, and a colorless transparent binder. In the present invention, the colored binder does not include a white colored binder.

With regard to the colored binders, a combination of the three colors of yellow (Y), magenta (M), and cyan (C), which are subtractive primaries, is preferable. If necessary, a black dye-colored binder (black binder) can be further used as a colored binder in combination. In the present invention, a yellow-colored binder is called a 'yellow binder', a magenta-colored binder is called a 'magenta binder', and a cyan-colored binder is called a 'cyan binder'. An M dye and

a C dye may each comprise two, that is, dark- and pale-colored, types of binders. The colorless binder can be used in order to adjust the CMY color densities. Furthermore, a desired effect can be attained by the combined use of a binder (white binder) containing a white (W) pigment such as titanium white.

The total amount of colored binder, colorless binder, and white-binder discharged is preferably constant per unit area.

As another example of the step of forming a colored cross-sectional shape, it is possible to employ a two-stage step in which, after a colorless ultraviolet-curing binder alone is discharged onto a powder material according to the shape data and cured by ultraviolet irradiation, a normal CMY inkjet containing no binder is discharged on the bonded powder material layer according to the coloration data for the layer.

At the same time as or after the ultraviolet-curing binder is discharged, the surface of the discharged binder is exposed to ultraviolet rays using an ultraviolet irradiation device, thus forming a powder material bonded body.

When the atmosphere for the UV irradiation is an atmosphere of an inert gas such as nitrogen or argon, the effect of oxygen in delaying radical polymerization of a polymerizable compound can be suppressed.

The inkjet system employed here means mainly an on-demand inkjet system, which includes a piezo on-demand inkjet system, a thermal on-demand inkjet system, and an electrostatic on-demand inkjet system, and the piezo on-demand inkjet system and the electrostatic on-demand inkjet system are preferable in terms of stability of the UV-curing binder.

In a powder material region to which no binder is applied, the powder is maintained in a separated state.

In a fifth step, the powder material in a region to which no binder has been applied is separated, and a bonded powder body (three-dimensional model) imagewise bonded by the binder is taken out. The powder material that has not been bonded is recovered and can be reused.

By sequentially repeating the third and fourth steps, a three-dimensional model formed by sequentially layering bonded colored powder material bodies corresponding to cross sections obtained by sectioning the modeled object in a plurality of planes can thus be produced.

By bonding into a cross-sectional shape a layer of a powder material having a refractive index $n_1$ by means of a binder that gives a refractive index $n_2$ (here, $-0.1 \leq (n_1-n_2) \leq 0.1$), a transparent or substantially transparent three-dimensional model can be produced.

The three-dimensional model thus obtained may be subjected to a posttreatment step such as cleaning, thermal treatment, resin or wax impregnation, or polishing. Cleaning is carried out by blowing the above-mentioned three-dimensional model and brushing so as to remove any powder remaining in gaps, thus enabling surplus powder to be removed. The thermal treatment increases the strength and the durability of the above-mentioned three-dimensional model. Wax impregnation reduces the porosity, imparts water resistance to the above-mentioned three-dimensional model, and makes finishing by polishing easy. Finishing by polishing improves the surface smoothness.

Each component used in the present invention is explained below. Specific details should not be construed as being limited to those in the explanation below.

## Binder

The binder used in the present invention cures by the application of energy. The binder that cures 'by the application of energy' includes a resin that cures by a chemical reaction that is thermally activated. Such a thermosetting resin includes an epoxy resin.

The epoxy resin is a resin having a three-membered ring called an oxirane, has a chain-form or cyclic aliphatic or aromatic ring as a reactive group, and cures to become a polymer when treated with a curing agent. Examples of the epoxy resin include the diglycidyl ether of bisphenol A (DGEBA). Examples of the curing agent include a polyamide (Versamid series), a polyamine, an acid anhydride, and a polymercaptan.

In the present invention, in the case where the epoxy resin is used as the binder, it is preferable to discharge the epoxy resin and the curing agent therefor from separate nozzles and mix them on the powder material so that they can cure.

Examples of thermosetting resins other than the epoxy resin include a vinyl urethane and a cyanoacrylate.

In order to increase the curing speed of the thermosetting binder, an appropriate external heating source may be used. A curing reaction may be promoted by applying hot air to the region to which the binder is applied or by employing infrared energy or microwave energy.

As a thermally curing binder that can be used in the present invention, a liquid that is not accompanied by a chemical reaction may be used. Specific examples of such a binder include a case in which a powder material containing starch as a main component and a binder containing water as a main component are supplied and starch particles are bonded to each other via water, and a practical application is seen in a three-dimensional modeling printer from Z Corporation, which uses a system in which powder particles comprising starch /cellulose are bonded. Such a binder is also described in JP-A-6-218712 (Japanese registered patent No. 2729110).

The binder used in the present invention preferably employs a binder that is cured by the application of light energy, and more preferably employs a UV-curing binder. The UV-curing binder comprises a photopolymerization initiator and at least one type of polymerizable compound as essential components; substantially all of the constituent materials are cured by UV light, and have the function of bonding the powder material. With regard to the proportions of the constituent materials, the photopolymerization initiator is preferably 0.05 wt % to 10 wt % relative to the total amount of the polymerizable compound and the photopolymerization initiator, and more preferably 0.1 wt % to 5 wt %, and the polymerizable compound is preferably 90 wt % to 99.95 wt %, and more preferably 95 wt % to 99.9 wt %.

The viscosity at 25°C of the binder is 5 to 100 mPa·s, preferably 5 to 80 mPa.s, and more preferably 10 to 50 mPa·s. In the present invention, the viscosity of the binder is a value measured using a model E viscometer (VISCONIC ELD, manufactured by Tokyo Keiki Co., Ltd.) at 25°C.

It is preferable to use a polyfunctional polymerizable compound having high viscosity and a polymerizable compound having low viscosity as an appropriate mixture so that the viscosity at 25°C of the binder is in the above-mentioned range.

Preferred examples of the polyfunctional polymerizable compound having high viscosity include tri- or higher-functional (meth)acrylates. Preferred examples of the tri- or higher-functional (meth)acrylates include tetra-functional, penta-functional, or hexa-functional (meth)acrylates.

Preferred examples of the polymerizable compound having low viscosity include monofunctional and/or difunctional (meth)acrylates.

It is also possible to use an organic solvent having a boiling point of no greater than 150°C as a viscosity adjusting agent for the binder.

<u>Polymerizable compound</u>

With regard to the polymerizable compound that can be used in the UV-curing binder, those for which addition-polymerization or ring-opening polymerization is started by a radical species, a cationic species, etc. formed from a photopolymerization initiator by irradiation with UV light and a polymer is formed are preferably used. With regard to the mode of polymerization of the addition-polymerization, there are radical, cationic, anionic, metathesis, and coordination polymerization. With regard to the mode of polymerization of the ring-opening polymerization, there are cationic, anionic, radical, metathesis, and coordination polymerization.

As an addition-polymerizable compound, a compound having at least one ethylenically unsaturated double bond can be cited. As the addition-polymerizable compound, a compound having at least one, and preferably two or more terminal ethylenically unsaturated bonds can be used preferably. Such terminally ethylenically unsaturated compounds are widely known in the present industrial field. In the present invention, they can be used without particular restriction as long as the binder composition can be discharged stably from an inkjet nozzle.

The ethylenically unsaturated polymerizable compound is, in terms of its chemical configuration, a monofunctional polymerizable compound, a polyfunctional polymerizable compound (i.e. difunctional, trifunctional, or 4- to 6-functional polymerizable compound), or a mixture thereof. Examples of the monofunctional polymerizable compound include unsaturated carboxylic acids (e.g. acrylic acid, methacrylic acid, itaconic acid, crotonic acid, isocrotonic acid, and maleic acid), esters thereof, and amides thereof. Examples of the polyfunctional polymerizable compound include esters of an unsaturated carboxylic acid and an aliphatic polyhydric alcohol compound and amides of an unsaturated carboxylic acid and an aliphatic polyhydric amine compound.

It is also possible to use an adduct between an unsaturated carboxylic acid ester or amide having a nucleophilic substituent such as a hydroxyl group, an amino group, or a mercapto group, and a monofunctional or polyfunctional isocyanate or epoxide; a dehydration-condensation product with a monofunctional or polyfunctional carboxylic acid; etc. It is also possible to use an adduct between an unsaturated carboxylic acid ester or amide having an electrophilic substituent such as an isocyanate group or an epoxy group and a monofunctional or polyfunctional alcohol, amine or thiol; or a substitution product between an unsaturated carboxylic acid ester or amide having a leaving group such as a halogen or a tosyloxy group and a monofunctional or polyfunctional alcohol, amine or thiol.

Specific examples of radically polymerizable compounds that are esters of an unsaturated carboxylic acid and an aliphatic alcohol compound are represented by (meth)acrylic acid esters, and it is preferable to use at least one type of tri- or higher- functional (meth)acrylate and at least one type of monofunctional and/or difunctional (meth)acrylate. Although they can be used singly, the two can be used in combination. It is also possible to use another polymerizable compound in combination.

Specific examples of the monofunctional (meth)acrylate include tolyloxyethyl (meth)acrylate, phenyloxyethyl (meth)acrylate, cyclohexyl (meth)acrylate, ethyl (meth)acrylate, methyl (meth)acrylate, isobornyl (meth)acrylate, and tetrahydrofurfuryl (meth)acrylate.

Specific examples of the difunctional (meth)acrylate include ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, 1,6-hexanediol di(meth)acrylate, 1,4-cyclohexanediol di(meth)acrylate, tetraethylene glycol di(meth)acrylate, pentaerythritol di(meth)acrylate, dipentaerythritol di(meth)acrylate, bis[p-(3-(meth)acryloxy-2-hydroxypropoxy)phenyl]dimethylmethane, and bis-[p-((meth)acryloxyethoxy)phenyl]dimethylmethane.

Furthermore, various types of radically polymerizable compounds that are esters of an unsaturated carboxylic acid and a divalent aliphatic alcohol compound are commercially available, and examples thereof include PEG300 diacrylate and PEG600 diacrylate (EB11, manufactured by Daicel-UCB Co., Ltd.).

Specific examples of the trifunctional (meth)acrylate include trimethylolpropane tri(meth)acrylate, trimethylolpropane ethoxytri(meth)acrylate, trimethylolethane tri(meth)acrylate, an alkylene oxide-modified tri(meth)acrylate of trimethylolpropane, pentaerythritol tri(meth)acrylate, dipentaerythritol tri(meth)acrylate, trimethylolpropane tri((meth)acryloyloxypropyl) ether, isocyanuric acid alkylene oxide-modified tri(meth)acrylate, propionic acid dipentaerythritol tri(meth) acrylate, tri((meth)acryloyloxyethyl) isocyanurate, hydroxypivalaldehyde-modified dimethylolpropane tri(meth)acrylate, and sorbitol tri(meth)acrylate.

Specific examples of the tetra-functional (meth)acrylate include pentaerythritol tetra(meth)acrylate, sorbitol tetra(meth)acrylate, ditrimethylolpropane tetra(meth)acrylate, propionic acid dipentaerythritol tetra(meth)acrylate, and an ethoxylated pentaerythritol tetra(meth)acrylate.

Specific examples of the penta-functional (meth)acrylate include sorbitol penta(meth)acrylate and dipentaerythritol penta(meth)acrylate.

Specific examples of the hexa-functional (meth)acrylate include dipentaerythritol hexa(meth)acrylate, sorbitol hexa(meth)acrylate, an alkylene oxide-modified hexa(meth)acrylate of phosphazene, and a caprolactone-modified dipentaerythritol hexa(meth)acrylate.

Specific examples of the polyfunctional (meth)acrylate further include a polyester (meth)acrylate oligomer.

The above-mentioned notation '(meth)acrylate ester' is an abbreviation denoting that it can take either a methacrylate ester structure or an acrylate ester structure.

In addition to the (meth)acrylate ester, an itaconate ester, a crotonate ester, an isocrotonate ester, a maleate ester, etc. can also be used as the polymerizable compound.

Examples of the itaconate ester include ethylene glycol diitaconate, propylene glycol diitaconate, 1,3-butanediol diitaconate, 1,4-butanediol diitaconate, tetramethylene glycol diitaconate, pentaerythritol diitaconate, and sorbitol tetraitaconate.

Examples of the crotonate ester include ethylene glycol dicrotonate, tetramethylene glycol dicrotonate, pentaerythritol dicrotonate, and sorbitol tetracrotonate.

Examples of the isocrotonate ester include ethylene glycol diisocrotonate, pentaerythritol diisocrotonate, and sorbitol tetraisocrotonate.

Examples of the maleate ester include ethylene glycol dimaleate, triethylene glycol dimaleate, pentaerythritol dimaleate, and sorbitol tetramaleate.

Examples of other esters include aliphatic alcohol esters disclosed in, for example, JP-B-46-27926, JP-B-51-47334 (JP-B denotes a Japanese examined patent application publication), and JP-A-57-196231, those having an aromatic skeleton disclosed in JP-A-59-5240, JP-A-59-5241, and JP-A-2-226149, and those containing an amino group disclosed in JP-A-1-165613.

Specific examples of the amide monomer of an unsaturated carboxylic acid and an aliphatic polyhydric amine compound include methylenebisacrylamide, methylenebismethacrylamide, 1,6-hexamethylenebisacrylamide, 1,6-hexamethylenebismethacrylamide, diethylenetriaminetrisacrylamide, xylylenebisacrylamide, and xylylenebismethacrylamide.

Other preferred examples of amide monomers include those having a cyclohexylene structure disclosed in JP-B-54-21726.

Furthermore, an addition-polymerizable urethane compound produced by an addition reaction of an isocyanate and a hydroxyl group is also desirable, and specific examples thereof include a vinylurethane compound having two or more polymerizable vinyl groups per molecule obtained by adding a hydroxyl group-containing vinyl monomer represented by Formula (I) below to a polyisocyanate compound having two or more isocyanate groups per molecule, such as that described in JP-B-48-41708.

Formula (I) $CH_2=C(R^1)COOCH_2CH(R^2)OH$

(Here, $R^1$ and $R^2$ denote H or $CH_3$.)

A urethane acrylate described in JP-A-7-247332 may also be used preferably as the polymerizable compound of the present invention. More specifically, the urethane acrylate is a radically curable urethane monomer (oligomer), and substantially completely reacts with a vinyl unsaturated compound such as a urethane monomer. Some of these monomers are described in US-A-3,297,745 and may be produced by a reaction between an organic diisocyanate and an ethylenically unsaturated alcohol represented by Formula (II) below;

Formula (II) $R^1CH=C(R^2)COO(R^3)OH$

(here, $R^1$ is selected from a hydrogen atom, a methyl group, and a benzyl group. $R^2$ is selected from a hydrogen atom and a methyl group. $R^3$ is selected from an alkylene group).

These urethane acrylates are soluble in vinyl monomers, are cured by a method involving a free radical mechanism, and leave no isocyanate residue.

The urethane acrylates that can be used in the present invention include diacrylates, triacrylates, tetraacrylates, hexaacrylates, etc. and are the reaction products of an aliphatic or aromatic polyisocyanate and a polyhydroxy-containing monomer such as a diol, a glycol, or a polyol. They include, for example, a reaction product of

A) at least one organic polyisocyanate compound,
B) at least one α,β-ethylene unsaturated alcohol represented by Formula (III) below;

Formula (III) $CH_2=C(R^2)COO(R^3)OH$

(in the Formula, $R^2$ is H or $CH_3$, and $R^3$ is an alkylene group or a caprolactam residue), and
C) at least one polyhydric alcohol such as, for example, a glycol and/or a polyhydroxy polymer.

Organic polyisocyanates that can be used as compound (A) may have 2, 3, or up to 6 reactive isocyanate groups. A compound having two reactive groups can be represented by

OCN-R1-NCO

(in the formula, R1 is an inertly substituted or unsubstituted divalent aliphatic, alicyclic, or aromatic group having at least 4 carbon atoms).

Since an aromatic group absorbs more UV radiation than an aliphatic or alicyclic group, R1 is preferably the latter. 'Inertly substituted' means that the substituent, if any, on the divalent group is substantially inactive toward an α, β-ethylene unsaturated alcohol, a glycol, or a polyhydroxy polymer under the reaction conditions, excluding α,β-ethylene unsaturated.

Desirable examples of the polyisocyanate compound include toluene-2,4-diisocyanate, 2,2,4-trimethylhexamethylene-1,6-diisocyanate, hexamethylene-1,6-diisocyanate, diphenylmethane-4,4'-diisocyanate, *m*-phenylene diisocyanate, *p*-phenylene diisocyanate, 2,6-tolylene diisocyanate, 1,4-cyclohexamethylenedimethyl diisocyanate, xylene-1,4-diisocyanate, xylene-1,3-diisocyanate, isophorone diisocyanate, 4,4'-methylenebis(cyclohexyl isocyanate), a reaction product between one of the above-mentioned polyisocyanates and a polyamine or a low molecular weight polyol such as an alkylene glycol, and a urethonimine obtained by heating one of the above-mentioned polyisocyanates at high temperature in the presence of a phosphorus catalyst to give a polycarbodiimide and reacting this with another isocyanate such as, for example, one disclosed in US-A-4014935.

Examples of the α,β-ethylene unsaturated alcohol that can be used as the compound (B) include 2-hydroxyethyl acrylate and methacrylate, 3-hydroxypropyl acrylate and methacrylate, 4-hydroxybutyl acrylate and methacrylate, allyl alcohol, a partial acrylic acid and methacrylic acid ester of a polyhydroxy compound such as, for example, the monoacrylate and monomethacrylate of ethylene glycol, 1,2-propylene glycol, 1,3-propylene glycol, 1,4-butylene glycol, 1,6-hexamethylene glycol, diethylene glycol, triethylene glycol, or dipropylene glycol, glycerol monoacrylate and monomethacrylate, pentaerythritol monoacrylate and monomethacrylate, acrylate- or methacrylate-capped caprolactone alcohol and polyol, and acrylate- or methacrylate-capped polycaprolactone derivatives such as those disclosed in US-A-3700643.

Examples of the polyhydric alcohol that can be used as the compound (C) include saturated aliphatic diols, polymeric polyalkylene oxide polyols, saturated polyhydroxy polyesters, and α,β-unsaturated polyhydroxy polyesters, and specific examples thereof include 1,4-butanediol, ethylene glycol, propylene glycol, 1,3-butanediol, pentanediol, hexanediol, neopentyl glycol, polyethylene glycol, polytetramethylene glycol, polycaprolactonediol and triol, and polyester diol and triol.

Representative examples of the urethane acrylate of the present invention include a reaction product between 4 mol of isophorone diisocyanate or dicyclohexyl-4,4'-methane diisocyanate, 2 mol of 1,4-butanediol, 1 mol of diethylene glycol adipic acid ester or polytetramethylene ether glycol (having an average molecular weight of about 2000), and 1 mol of caprolactone methacrylate or 2-hydroxyethyl methacrylate.

Various types of urethane acrylates are commercially available, and examples thereof include Ebecryl 270 (manufactured by Daicel-UCB Co., Ltd.).

In the present invention, other preferred examples of the (meth)acrylic acid ester include epoxy (meth)acrylates. The epoxy (meth)acrylate is preferably obtained by an addition reaction between an epoxy compound having a ring

structure and acrylic acid, methacrylic acid, acryloyl chloride, methacryloyl chloride, etc.

Examples of the epoxy compound having a ring structure include a bisphenol A epoxy resin, a bisphenol F epoxy resin, a halobisphenol A epoxy resin, a tetraphenylolethane tetraglycidyl ether, a phenol novolac type epoxy resin, an o-cresol novolac type epoxy resin, a naphthalene-based epoxy resin, a Cardo type epoxy resin, a glycidyl amine type epoxy resin, a glycidyl ester type epoxy resin, a hydrogenated bisphenol A epoxy resin, a hydrogenated bisphenol F epoxy resin, and an isocyanurate type epoxy resin.

Various types of epoxy (meth)acrylates are commercially available, and examples thereof include modified bisphenol A epoxy acrylate (Ebecryl 3701; manufactured by Daicel-UCB Co., Ltd.).

The number of (meth)acryloyl groups in the molecule is preferably 2 or more, and more preferably 3 or more.

Specific examples of the epoxy (meth)acrylate are shown below.

Chem. 1

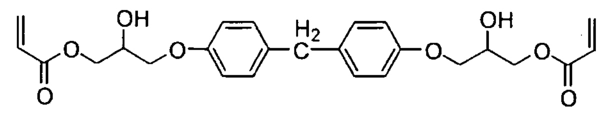

Compound 1-1

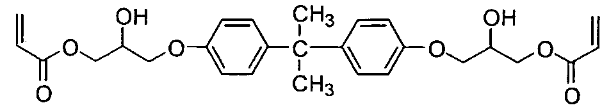

Compound 1-2

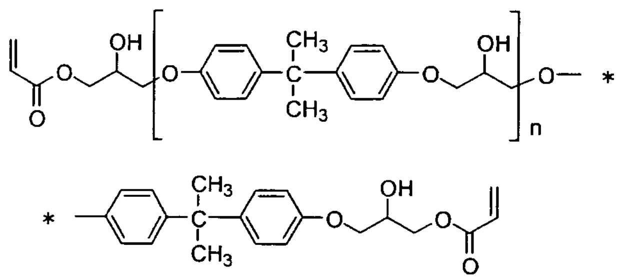

Compound 1-3

n is preferably 1 to 5.

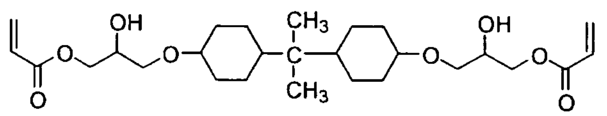

Compound 1-4

In the present invention, a cationic ring-opening polymerizable compound having in the molecule one or more cyclic ether groups such as an epoxy group and/or an oxetane group can be used, together with a UV cationic polymerization initiator, as the UV-curing binder.

An overall explanation of cationically polymerizable compounds that can be used preferably in the present invention is given below. As the cationically polymerizable compounds, curable compounds containing a ring-opening polymerizable group can be cited; thereamong, heterocyclic group-containing curable compounds are preferable. Examples of such curable compounds include cyclic iminoethers and vinyl ethers such as epoxy derivatives, oxetane derivatives, tetrahydrofuran derivatives, cyclic lactone derivatives, cyclic carbonate derivatives, and oxazoline derivatives; in particular, epoxy derivatives, oxetane derivatives, and vinyl ethers are preferable.

Preferred examples of the epoxy derivatives can be broadly divided into monofunctional glycidyl ethers, polyfunctional glycidyl ethers, monofunctional alicyclic epoxides, and polyfunctional alicyclic epoxides.

Examples of specific monofunctional and polyfunctional glycidyl ether compounds include diglycidyl ethers (e.g. ethylene glycol diglycidyl ether, bisphenol A diglycidyl ether), tri- or higher-functional glycidyl ethers (trimethylolethane triglycidyl ether, trimethylolpropane triglycidyl ether, glycerol triglycidyl ether, triglycidyl trishydroxyethyl isocyanurate, etc.), tetra- or higher-functional glycidyl ethers (sorbitol tetraglycidyl ether, pentaerythritol tetraglycidyl ether, a polyglycidyl ether of a cresol novolac resin, a polyglycidyl ether of a phenol novolac resin, etc.), alicyclic epoxides (Celloxide 2021 P, Celloxide 2081, Epolead GT-301, and Epolead GT-401 (all manufactured by Daicel Chemical Industries, Ltd.), EHPE (manufactured by Daicel Chemical Industries, Ltd.), a polycyclohexyl epoxy methyl ether of a phenol novolac resin, etc.), and oxetanes (OX-SQ, and PNOX-1009 (both manufactured by Toagosei Co., Ltd.), etc.), but the

present invention should not be construed as being limited thereto.

In the present invention, an alicyclic epoxy derivative can be preferably used. An 'alicyclic epoxy group' referred to here means a partial structure that is formed by epoxidizing a double bond of a cycloalkene ring such as a cyclopentene group or a cyclohexene group using an appropriate oxidizing agent such as hydrogen peroxide or a peracid.

With regard to the alicyclic epoxy compound, polyfunctional alicyclic epoxides having two or more cyclohexene oxide groups or cyclopentene oxide groups per molecule are preferable. Specific examples of monofunctional or polyfunctional alicyclic epoxy compounds include 4-vinylcyclohexene dioxide, (3,4-epoxycyclohexyl)methyl-3,4-epoxycyclohexyl carboxylate, di(3,4-epoxycyclohexyl) adipate, di(3,4-epoxycyclohexylmethyl) adipate, bis(2,3-epoxycyclopentyl) ether, di(2,3-epoxy-6-methylcyclohexylmethyl) adipate, dicyclopentadiene dioxide, and 3,4-epoxycyclohexenylmethyl 3',4'-epoxycyclohexenecarboxylate.

The alicyclic epoxy compound can be used singly or in a combination of two or more types.

Various types of alicyclic epoxy compounds are commercially available from Union Carbide Japan Ltd. (Dow Chemical Japan, Ltd.), Daicel Chemical Industries, Ltd., etc.

It is also possible to use a normal glycidyl compound having an epoxy group and having no alicyclic structure in the molecule, singly or in combination with the above-mentioned alicyclic epoxy compound.

Examples of such a normal glycidyl compound include a glycidyl ether compound and a glycidyl ester compound, and it is preferable to use a glycidyl ether compound in combination.

Specific examples of the glycidyl ether compound include aromatic glycidyl ether compounds such as 1,3-bis (2,3-epoxypropyloxy)benzene, a bisphenol A epoxy resin, a bisphenol F epoxy resin, a phenol novolac epoxy resin, a cresol novolac epoxy resin, and a trisphenolmethane epoxy resin, and aliphatic glycidyl ether compounds such as 1,4-butanediol glycidyl ether, glycerol triglycidyl ether, propylene glycol diglycidyl ether, and trimethylolpropane triglycidyl ether. Examples of the glycidyl ester include the glycidyl ester of linolenic acid dimer.

The glycidyl ethers are commercially available from Yuka Shell Epoxy Co., Ltd. (Japan Epoxy Resin Co., Ltd.), etc.

In the present invention, it is possible to use a compound having an oxetanyl group, which is a 4-membered cyclic ether (hereinafter, also simply called an 'oxetane compound'). The oxetanyl group-containing compound is a compound having at least one oxetanyl group per molecule. These oxetanyl group-containing compounds can be broadly divided into monofunctional oxetane compounds having one oxetanyl group per molecule and polyfunctional oxetane compounds having two or more oxetanyl groups per molecule.

As the monofunctional oxetane compound, compounds represented by Formula (IV) below are preferable.

Chem. 2

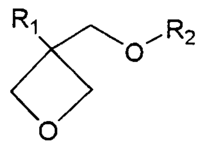

(IV)

In Formula (IV), $R_1$ denotes a methyl group or an ethyl group. $R_2$ denotes a hydrocarbon group having 6 to 12 carbons.

The hydrocarbon group denoted by $R_2$ can be a phenyl group or a benzyl group, is preferably an alkyl group having 6 to 8 carbons, and is particularly preferably a branched alkyl group such as 2-ethylhexyl. Examples of oxetane compounds in which $R_2$ is a phenyl group are described in JP-A-11-140279. Examples of oxetane compounds in which $R_2$ is a benzyl group, which can have a substituent, are described in JP-A-6-16804.

In the present invention, a polyfunctional oxetane compound can be used, and preferred compounds are those represented by Formula (V) below.

Chem. 3

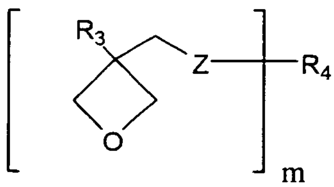

(V)

In Formula (V), m denotes a natural number of 2, 3, or 4, and Z denotes an oxygen atom, a sulfur atom, or a

selenium atom. $R_3$ is a hydrogen atom, a fluorine atom, a straight-chain or branched alkyl group having 1 to 6 carbons, a fluoroalkyl or allyl group having 1 to 6 carbons, a phenyl group, or a furyl group. $R_4$ is an m-valent linking group, is preferably a group having 1 to 20 carbons, and can contain one or more oxygen or sulfur atoms.

Z is preferably an oxygen atom, $R_3$ is preferably an ethyl group, m is preferably 2, $R_4$ is preferably a linear or branched alkylene group having 1 to 16 carbons or a linear or branched poly(alkyleneoxy) group, and a compound having any two or more of the preferred $R_3$, $R_4$, Z, and m is more preferable.

In the present invention, a non-shrinking polymerizable monomer can preferably be used. Non-shrinking polymerizable monomers are described in, for example, JP-A-2003-152248, and they may be used in the present invention. Specific details are explained below.

The non-shrinking polymerizable monomer referred to here means a monomer that does not undergo volume change accompanying polymerization of the monomer or that undergoes expansion, and is preferably a ring-opening polymerizable cyclic monomer, and more preferably a cyclic monomer that proceeds to a double ring-opening. Specific examples of the cyclic monomer include BOE (bicyclo orthoester), SOE (spiro orthoester), and SOC (spiro orthocarbonate), and in the case of cationic double ring-opening polymerization, a maximum of on the order of 10% of volume expansion is exhibited.

Chem. 4

(a)

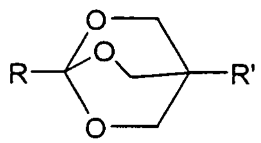

BOE

(b)

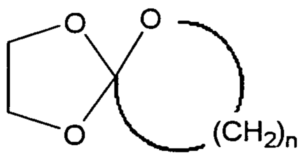

SOE

(c)

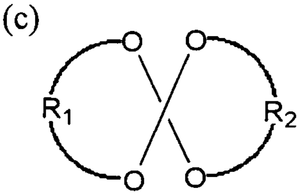

SOC

In the formula, R and R' each denote an optionally substituted alkyl group, n is an integer of 2 to 10, and $R_1$ and $R_2$ each denote an optionally substituted divalent alkylene group. A compound having a number of n of the above-mentioned cyclic structures (n denotes an integer of 2 to 4) has a chemical structure in which cyclic functional groups that have a structure derived by removing one hydrogen atom from the above-mentioned chemical structures (a) to (c) are bonded by an n-valent organic linking group.

The above-mentioned non-shrinking polymerizable monomer is preferably radically polymerizable, cationically polymerizable, or anionically polymerizable, and particularly preferably cationically polymerizable.

The non-shrinking polymerizable monomer used in the present invention preferably has a molecular weight of 200 to 1,000, and particularly preferably a molecular weight of 400 to 800.

Non-shrinking polymerizable monomers are known and are described in T. Endo and F. Mita, 'Rajikarukaikanjugoseimonoma (-Jugohishushukuseizairyou heno Ouyou no Kanousei-)' (Radical Ring-opening Polymerizable Monomers (-Possibility of Application to Non-shrinking Polymerizable Materials-)) (Proceedings of the Annual Meeting of The Adhesion Society of Japan, No. 32, pp. 36-49 (1994); T. Endo and F. Mita, 'Jugouji ni Hishushukusei wo Shimesu Shinkizairyou no Sekkei' (Design of Novel Material with Non-shrinking Properties during Polymerization) (Shikizai (Color Materials), 67 [4], 250-257 (1994)); T. Endo and T. Ariga 'Kanjokabonatorui no Kaikanjugou to Kinou' (Ring-opening Polymerization and Function of Cyclic Carbonates) (Shikizai (Color Materials), 68 [5], pp. 286-293 (1995)), etc. Furthermore, non-shrinking polymerizable monomers and production processes therefor are described in JP-A-61-22086, JP-A-57-42724, JP-A-59-6211, JP-A-2-32130, JP-A-6-321951, JP-A-7-64282, JP-A-7-64281, JP-A-7-33960, JP-A-8-27267, and JP-A-2000-256362.

Specific examples of the non-shrinking polymerizable monomer used in the present invention include spiro orthoester compounds having two spiro orthoester groups represented by Formula (VI) below. Specific examples of compounds of Formula (VI) are described in JP-A-8-27267 and JP-A-57-42724.

Chem. 5

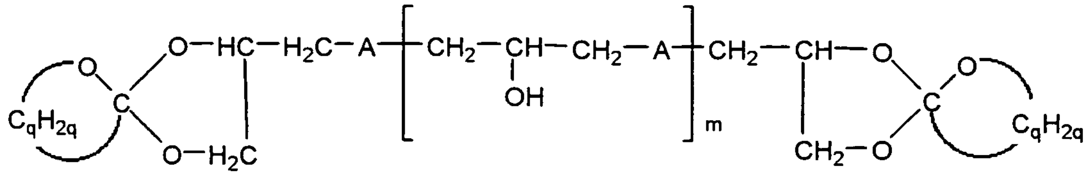

(VI)

In the formula, A denotes

Chem. 6

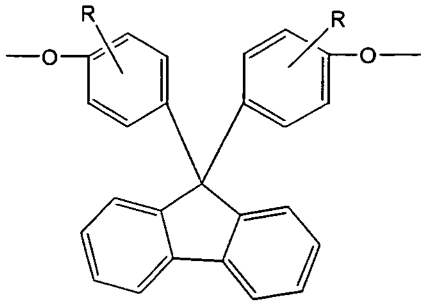

(in the formula, R denotes hydrogen or a lower alkyl group), m denotes an integer of 0 to 10, and g denotes an integer of 2 to 10.

It is also possible to use in the present invention a spiro orthoester compound having at least two spiro orthoester residues represented by Formula (VII) below. Examples of compounds corresponding to Formula (VII) below are described in JP-A-61-22086.

Chem. 7

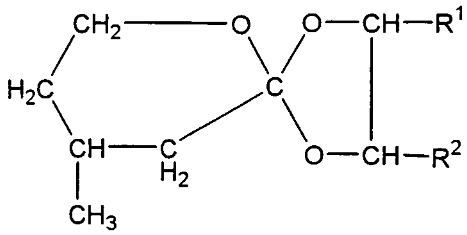

(VII)

In the formula above, $R^1$ denotes a hydrogen atom, $R^2$ denotes a group represented by (VII-a) or (VII-b) below, or $R^1$ and $R^2$ are bonded together to form a divalent group represented by (VII-c) below.

Chem. 8

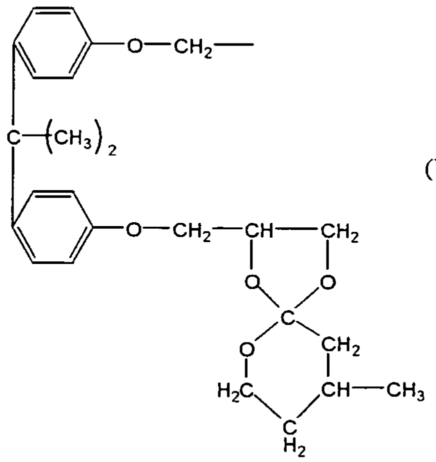

(VII-a)

Chem. 9

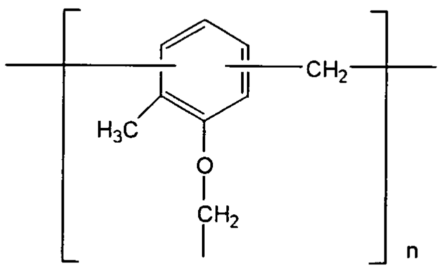

(VII-b)

In Formula (VII-b), n is an integer of 1 or above.

Chem. 10

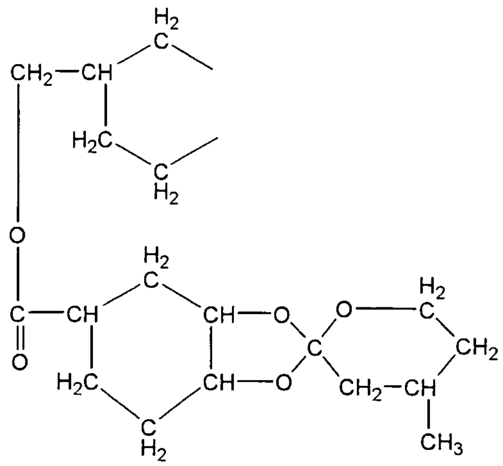

(VII-c)

As the UV-curing binder of the present invention, it is preferable to use a radically polymerizable ethylenically unsaturated compound and a cationically polymerizable cyclic ether (epoxy derivative and/or oxetane derivative) in combination. Since it has an interpenetrating polymer net (IPN) structure, there is the advantage that a bonded body having balanced physical properties can be obtained. In this case, as a photopolymerization initiator, a radical photopolymerization initiator and a cationic photopolymerization initiator (an onium salt, etc.) are preferably used in combination.

Photopolymerization initiator

The curable binder used in the present invention can be cured by a thermal polymerization initiator, but is also preferably cured by a photopolymerization initiator.

The photopolymerization initiator used in the present invention referred to here means a compound that generates active radical or cationic species by actinic radiation, and initiates and promotes a polymerization reaction of the binder. A polymerization initiator (radical photopolymerizing agent) that generates an active radical species can preferably be used. As the actinic radiation, radioactive radiation, $\gamma$-rays, $\alpha$-rays, an electron beam, ultraviolet rays, etc. can be used. In particular, a method in which ultraviolet rays are used for curing is preferable.

The thermal polymerization initiator that can be used in the present invention can employ a known compound with a bond having a small bond-dissociation energy. The thermal polymerization initiator may be used singly or in a combination of two or more types.

Examples of the thermal polymerization initiator include organic halogenated compounds, carbonyl compounds, organic peroxide compounds, azo polymerization initiators, azide compounds, metallocene compounds, hexaaryl biimidazole compounds, organic boric acid compounds, disulfonic acid compounds, and onium salt compounds.

Preferred examples of the polymerization initiator that generates radicals by the action of light include acetophenone compounds, benzoin compounds, benzophenone compounds, thioxanthone compounds, and benzil compounds. Examples of the acetophenone compounds include 2,2-diethoxyacetophenone, 2-hydroxy-2-methyl-1-phenylpropan-1-one, 4'-isopropyl-2-hydroxy-2-methylpropiophenone, 2-hydroxy-2-methylpropiophenone, *p*-dimethylaminoacetone, *p-tert*-butyldichloroacetophenone, *p-tert*-butyltrichloroacetophenone, *p*-azidobenzalacetophenone, and 1-hydroxycyclohexyl phenyl ketone. Examples of the benzoin compounds include benzoin, benzoin methyl ether, benzoin ethyl ether, benzoin n-propyl ether, benzoin isopropyl ether, benzoin *n*-butyl ether, benzoin isobutyl ether, and benzil dimethyl ketal. Examples of the benzophenone compounds include benzophenone, methyl o-benzoylbenzoate, Michler's ketone, 4,4'-bisdiethylaminobenzophenone, and 4,4'-dichlorobenzophenone. Examples of the thioxanthone compounds include thioxanthone, 2-methylthioxanthone, 2-ethylthioxanthone, 2-isopropylthioxanthone, 4-isopropylthioxanthone, 2-chlorothioxanthone, and 2,4-diethylthioxanthone. Examples of the benzil compounds include benzil and benzil-$\beta$-methoxyethyl acetal.

In the present invention, as the radical photopolymerizing agent, an acylphosphine oxide compound may preferably be used. Examples of the acylphosphine oxide compound include a compound represented by Formula (VIII) below and a compound represented by Formula (IX) below.

Chem. 11

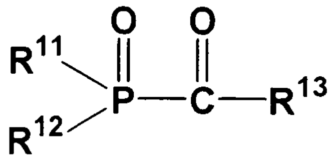

(VIII)

$R^{11}$ and $R^{12}$ in Formula (VIII) above independently denote an alkyl group, an aryl group, an alkoxy group, an aryloxy group, or a heterocyclic group, and $R^{13}$ denotes an alkyl group, an aryl group, or a heterocyclic group. $R^{11}$ and $R^{12}$ may be bonded together to form a cyclic structure.

The alkyl group, aryl group, heterocyclic group, alkoxy group, and aryloxy group may have a substituent. Examples of the substituent include an alkyl group, an aryl group, a hydroxyl group, a nitro group, a cyano group, a halogen atom, an alkylsulfonyl group, an arylsulfonyl group, an alkoxy group, an alkoxycarbonyl group, an aryloxy group, an aryloxycarbonyl group, an acyl group, a (mono- or di-alkyl) amino group, an acylamino group, a carbamoyl group, a sulfamoyl group, an alkylthio group, and an arylthio group. This substituent includes a group derived by removing one hydrogen atom from $R^{13}$ of the compound represented by Formula (VIII).

The alkyl group represented by $R^{11}$, $R^{12}$, or $R^{13}$ above may be a saturated group or an unsaturated group, and may be straight, branched, or cyclic. The alkyl group is preferably an alkyl group having 1 to 30 carbons, and examples thereof include a methyl group, an ethyl group, a propyl group, a butyl group, a hexyl group, an octyl group, a decyl group, an octadecyl group, a phenoxyethyl group, and a cyclohexyl group. However, the present invention should not be construed as being limited thereto.

Examples of the aryl group represented by $R^{11}$, $R^{12}$, or $R^{13}$ above include aryl groups having 6 to 30 carbons. Among these, a phenyl group, a naphthyl group, etc. are preferable, and examples thereof include a phenyl group, a 2-methylphenyl group, a 2,4-dimethylphenyl group, a 2,4,6-trimethylphenyl group, a 2-methoxyphenyl group, a 2,6-dimethoxyphenyl group, and a 2,6-dichlorophenyl group. However, the present invention should not be construed as being

limited thereto.

The heterocyclic group represented by $R^{11}$, $R^{12}$, or $R^{13}$ above is preferably a heterocyclic group containing an N, O, or S atom, and examples thereof include a pyridyl group, a furyl group, a thienyl group, an imidazolyl group, and a pyrrolyl group.

The alkoxy group represented by $R^{11}$ or $R^{12}$ above is preferably an alkoxy group having 1 to 30 carbons, and examples thereof include a methoxy group, an ethoxy group, a butoxy group, an octyloxy group, and a phenoxyethoxy group. However, the present invention should not be construed as being limited thereto.

The aryloxy group represented by $R^{11}$ or $R^{12}$ above is preferably an aryloxy group having 6 to 30 carbons, and examples thereof include a phenoxy group, a methylphenyloxy group, a chlorophenyloxy group, a methoxyphenyloxy group, and an octyloxyphenyloxy group. However, the present invention should not be construed as being limited thereto.

Chem. 12

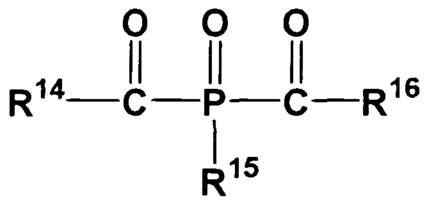

(IX)

$R^{14}$ and $R^{16}$ of Formula (IX) above independently denote an alkyl group, an aryl group, or a heterocyclic group, and $R^{15}$ denotes an alkyl group, an aryl group, an alkoxy group, an aryloxy group, or a heterocyclic group. The alkyl group, aryl group, heterocyclic group, alkoxy group, and aryloxy group represented by $R^{14}$, $R^{15}$, or $R^{16}$ above may have a substituent, and examples of the substituent include the same substituents as those in Formula (VIII).

The alkyl group, aryl group, heterocyclic group, alkoxy group, and aryloxy group of Formula (IX) above are the same as those in Formula (VIII) above.

Examples of the acylphosphine oxide compound represented by Formula (VIII) or (IX) above include compounds described in JP-B-63-40799, JP-B-5-29234, JP-A-10-95788, and JP-A-10-29997. Specific examples of the acylphosphine oxide compounds include compounds (compound examples (1) to (26)) shown below, but the present invention should not be construed as being limited thereto.

Chem. 13

(1)

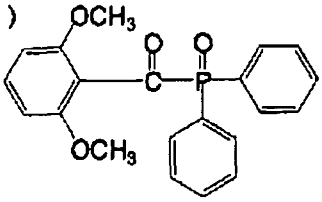

(6)

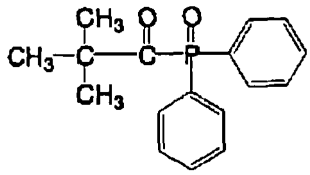

(2)

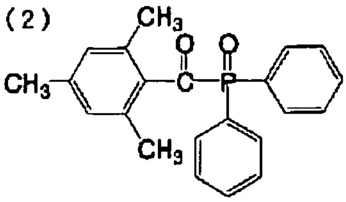

(7)

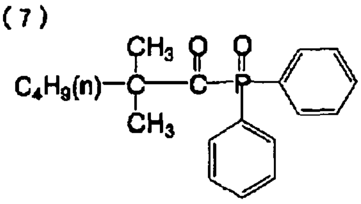

(3)

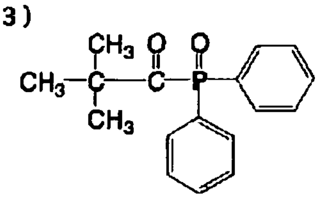

(8)

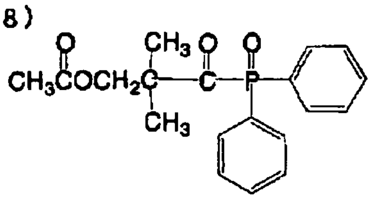

(4)

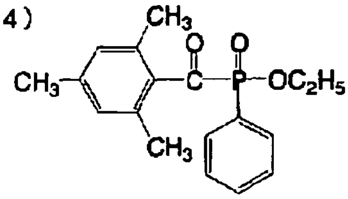

(9)

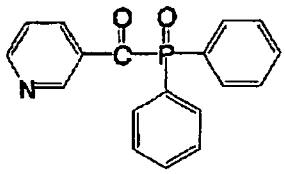

(5)

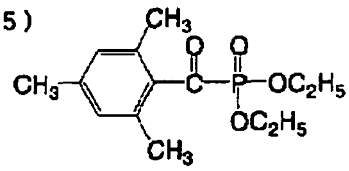

(10)

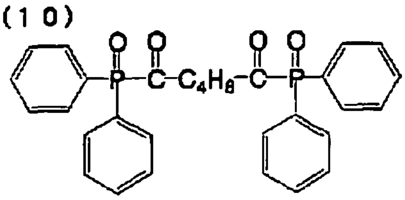

Chem. 14

(1 1)

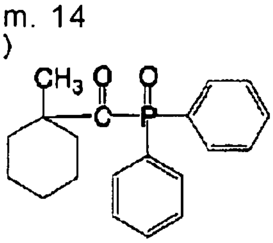

(1 6)

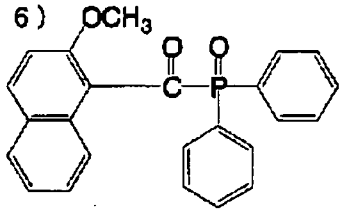

(1 2)

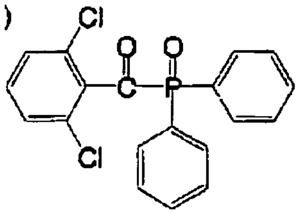

(1 7)

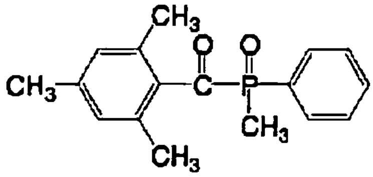

(1 3)

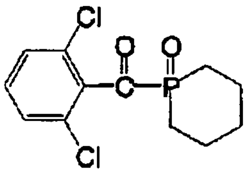

(1 8)

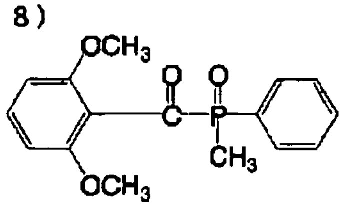

(1 4)

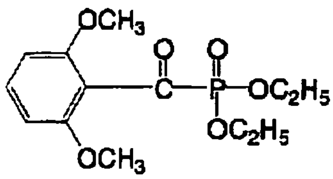

(1 9)

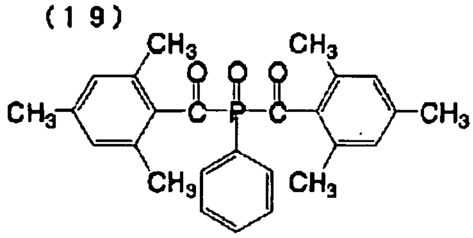

(1 5)

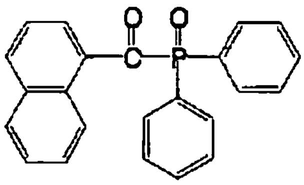

(2 0)

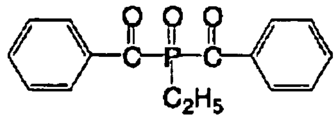

Chem. 15

(2 1)

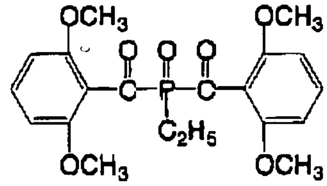

(2 2)

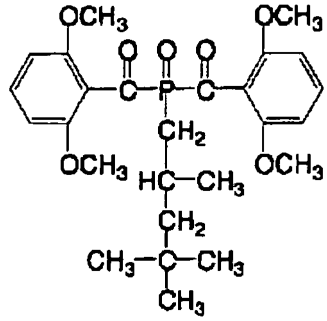

(2 3)

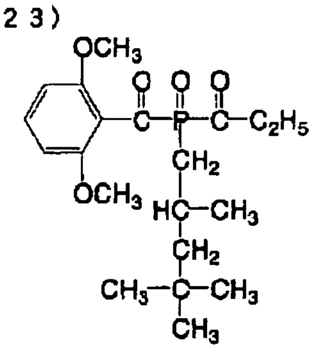

(2 4)

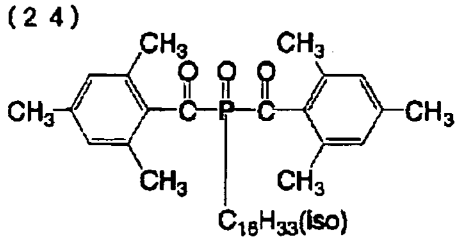

(2 5)

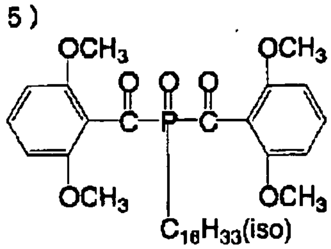

(2 6)

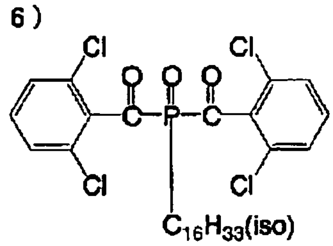

In the present invention, the acylphosphine oxide compound represented by at least one of Formula (VIII) and Formula (IX) above may be used singly or in a combination of two or more types.

In addition to the above-mentioned acylphosphine oxide compound, another polymerization initiator, in particular, the above-mentioned acetophenone-based compound, benzoin-based compound, benzophenone-based compound, thioxanthone-based compound, benzil-based compound, etc. may be used.

A sulfonium salt, an iodonium salt, etc., which are usually used as photo cation generators, can be used as radical generators by irradiation with ultraviolet rays, and they can therefore be used on their own in the present invention. Moreover, in order to increase the sensitivity, in addition to the polymerization initiator, a sensitizer can be used. Examples of the sensitizer include n-butylamine, triethylamine, tri-*n*-butylphosphine, and a thioxanthone derivative.

With regard to the photopolymerization initiator that generates an active cationic species by ultraviolet rays, an onium salt initiator, for example, an aromatic sulfonium salt such as a triaryl sulfonium salt, or an aromatic iodonium salt such as a diaryl iodonium salt is useful, and a nonionic initiator such as a nitrobenzyl ester of a sulfonic acid can also be used. Furthermore, known photopolymerization initiators described in 'Imeijingu You Yukizairyo' (Organic Materials for Imaging), Ed. by The Japanese Research Association for Organic Electronics Materials, Bun-shin Publishing

(1997), etc. can be used.

As a photoreaction initiator, an aromatic sulfonium salt, etc. is preferable since it is relatively stable thermally.

When an aromatic sulfonium salt or an aromatic iodonium salt is used as an onium salt photoreaction initiator, examples of its counter anion include $BF_4$-, $AsF_6^-$, $SbF_6^-$, $PF_6$-, and $B(C_6F_5)_4^-$. As the initiator, the aromatic sulfonium $PF_6$ salt or $SbF_6$ salt can be used preferably since it has solubility and an appropriate polymerization activity. In order to improve the solubility, it is preferable to employ a chemical structure in which one or more alkyl or alkoxy groups having 1 to 10 carbons have been introduced into the aromatic group, normally a phenyl group, of the aromatic iodonium salt or aromatic sulfonium salt.

The aromatic sulfonium $PF_6$ salts and $SbF_6$ salts are commercially available from Union Carbide Japan, etc. The aromatic sulfonium $PF_6$ salts are also commercially available from Asahi Denka Co., Ltd. under the product name Adeka Optomer SP series.

Since aromatic sulfonium salts have an absorption up to about 360 nm, and aromatic iodonium salts have an absorption up to about 320 nm, in order to cure them they are preferably irradiated with ultraviolet rays having spectral energy in this region.

Organic solvent

In the present invention, as a viscosity adjusting agent for the binder an organic solvent having a boiling point of no greater than 150°C may be used. Examples of the organic solvent having a boiling point of no greater than 150°C include (poly)alkylene glycol mono alkyl ethers such as ethylene glycol monomethyl ether, ethylene glycol monoethyl ether, propylene glycol monomethyl ether, and propylene glycol monoethyl ether, acetate esters such as ethyl acetate, *n*-propyl acetate, *iso*-propyl acetate, *n*-butyl acetate, and *iso*-butyl acetate, aromatic hydrocarbons such as benzene, toluene, and xylene, ketones such as methyl ethyl ketone, acetone, methyl isobutyl ketone, ethyl *n*-butyl ketone, diisopropyl ketone, and acetyl acetone, and alcohols such as ethanol, propanol, and butanol.

The amount of organic solvent used is preferably 2 to 30 wt % relative to the total amount of the binder, and more preferably 2 to 15 wt %, and it is particularly preferable not to use an organic solvent.

It is preferable that the volatile component content of the cured UV-curing binder is no greater than 5 wt %. Because of this, it is preferable to employ as the binder a solvent-free formulation containing no organic solvent.

In order to reduce the volatile component content after curing, residual monomer may be post-polymerized, after a three-dimensional model is produced, by irradiation with UV light or by heating.

Polymerizable viscosity-adjusting compound

As a polymerizable viscosity-adjusting compound, a compound having low viscosity and being capable of copolymerizing with a polymerizable compound is used. Examples thereof include an acrylate, a methacrylate, and an acrylamide. Specific examples thereof include tolyloxyethyl (meth)acrylate, phenyloxyethyl (meth)acrylate, cyclohexyl (meth)acrylate, ethyl (meth)acrylate, methyl (meth)acrylate, ethylene glycol di(meth)acrylate, divinylbenzene, methylenebisacrylamide, and 1,6-di(meth)acryloyloxyhexane. Tolyloxyethyl (meth)acrylate, ethylene glycol di(meth)acrylate, 1,6-di(meth)acryloyloxyhexane, etc. are preferable.

With regard to ring-opening polymerizable cyclic ethers, although di- or higher-functional cyclic ethers are generally highly reactive, their viscosities are also high. A monofunctional cyclic ether can be used in combination in order to attain a low viscosity.

Powder material

As the powder material, any of an inorganic powder, an organic powder, and an inorganic/organic composite powder can be used. Examples of the inorganic powder include metals, oxides, composite oxides, hydroxides, carbonates, sulfates, silicates, phosphates, nitrides, carbides, sulfides, and composites of at least two types thereof. Specific examples thereof include magnesium hydroxide, silica gel, alumina, aluminum hydroxide, glass, titanium oxide, zinc oxide, zirconium oxide, tin oxide, potassium titanate, aluminum borate, magnesium oxide, magnesium borate, calcium hydroxide, basic magnesium sulfate, calcium carbonate, magnesium carbonate, calcium sulfate, magnesium sulfate, calcium silicate, magnesium silicate, calcium phosphate, silicon nitride, titanium nitride, aluminum nitride, silicon carbide, titanium carbide, zinc sulfide, and composites of at least two types thereof. Preferred examples include magnesium hydroxide, silica gel, alumina, aluminum hydroxide, glass, calcium carbonate, magnesium carbonate, calcium sulfate, and magnesium sulfate.

Examples of the organic powder include synthetic resin particles and natural polymer particles. Specific examples include acrylic resins, polyethylene, polypropylene, polyethylene oxide, polypropylene oxide, polyethyleneimine, polystyrene, polyurethane, polyurea, polyester, polyamide, polyimide, carboxymethyl cellulose, gelatin, starch, chitin,

and chitosan, and preferred examples include acrylic resins, polyurethane, gelatin, and polystyrene.

As the organic powder material, powder particles obtained by grinding a bulk-polymerized polymerizable compound used for a binder can be used. The polymerizable compound used for the binder monomer can be subjected to suspension polymerization or pearl polymerization to give a powder material having a desired particle size. In this case, the refractive index of the powder material and the refractive index of the binder can be made close to each other.

Examples of the inorganic/organic composite powder include a composite of the above-mentioned organic powder and inorganic powder.

The average particle size of the powder material is preferably 0.1 to 1,000 μm, more preferably 0.5 to 300 μm, yet more preferably 0.8 to 50 μm, and most preferably 3 to 30 μm. The average particle size referred to here means a volume-average particle size, and may be measured using a COULTER MULTISIZER manufactured by Beckman Coulter, Inc.

The shape of the powder material can be any of amorphous, spherical, tabular, acicular, porous, etc. forms.

The refractive index $n_1$ of the powder material is preferably in the range of 1.4 to 1.7.

The refractive index of the binder for bonding the powder material particles to each other is defined as $n_2$. When an ethylenically unsaturated compound is used as the binder, the refractive index of the bonding agent formed by polymerization of this compound is defined as $n_2$. The smaller the absolute value of $(n_1-n_2)$, the higher the transparency of the model obtained. When the absolute value of the difference between the refractive indexes is no greater than 0.1, the transparency is high, and when it is no greater than 0.06, a nearly transparent model can be obtained. 'Substantially transparent' or 'nearly transparent' referred to in the present invention means that the transmittance per cm of optical path is 50% or higher

Colorant

Colorants that can be used in the production process of the present invention can be broadly divided into dyes and pigments, and dyes can be used preferably.

With regard to the dyes, the use of subtractive primaries, that is, yellow (Y), magenta (M), and cyan (C), enables a wide range of hues to be reproduced at different saturations.

In the present invention, it is preferable to use dyes that are used for photographic color prints.

It is also possible to preferably use an oil-soluble dye as the dye.

The oil-soluble dye means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.

In a colored fine particle dispersion and a colored binder that can be used in the present invention, the oil-soluble dye may be used singly or in a combination of two or more types. Furthermore, another colorant such as a water-soluble dye, a disperse dye, or a pigment may be contained as necessary in a range that does not interfere with the effects of the present invention.

Among the oil-soluble dyes that can be applied to the present invention, as a yellow dye, any may be used. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the above-mentioned oil-soluble dyes that can be applied to the present invention, as a magenta dye, any may be used. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be applied to the present invention, as a cyan dye, any may be used. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples thereof include CI Solvent Black 3, 7, 27, 29, and 34; CI Solvent Yellow 14, 16, 19, 29, 30, 56, 82, 93, and 162; CI Solvent Red 1, 3, 8, 18, 24, 27, 43, 49, 51, 72, 73, 109, 122, 132, and 218; CI Solvent Violet 3; CI Solvent Blue 2, 11, 25, 35, 38, 67, and 70; CI Solvent Green 3 and 7; and CI Solvent Orange 2. Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

In the present invention, a disperse dye may be used in a range that enables it to be dissolved in a water-immiscible organic solvent. Specific preferred examples thereof include CI Disperse Yellow 5, 42, 54, 64, 79, 82, 83, 93, 99, 100, 119, 122, 124, 126, 160, 184:1, 186, 198, 199, 201, 204, 224, and 237; CI Disperse Orange 13, 29, 31:1, 33, 49, 54, 55, 66, 73, 118, 119, and 163; CI Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; CI Disperse Violet 33; CI Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and CI Disperse Green 6:1 and 9.

Particularly preferred examples of the oil-soluble dye include azo and azomethine dyes represented by Formulae (1) and (2) below. Dyes represented by Formula (2) below are known, in the photographic material area, as dyes that are generated from a coupler and a developing agent by oxidation.

Chem. 16

Formula (1)

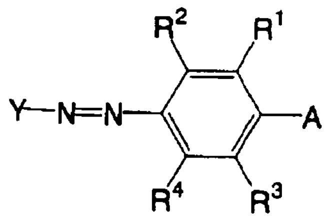

Formula (2)

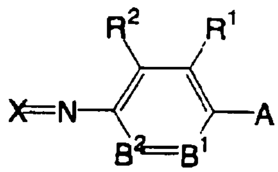

In Formula (1) and (2) above, $R^1$, $R^2$, $R^3$ and $R^4$ independently denote a hydrogen atom, a halogen atom, an aliphatic group, an aromatic group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a heterocyclooxy group, an azo group, an acyloxy group, a carbamoyloxy group, a silyloxy group, an aryloxycarbonyl group, an aryloxycarbonylamino group, an imide group, a heterocyclothio group, a sulfinyl group, a phosphoryl group, an acyl group, a carboxyl group, or a sulfo group.

In Formulae (1) and (2) above, in particular, $R^2$ is preferably, among the above-mentioned substituents, a hydrogen atom, a halogen atom, an aliphatic group, an alkoxy group, an aryloxy group, an amide group, a ureido group, a sulfamoylamino group, an alkoxycarbonylamino, or a sulfonamide group.

In the present specification, the aliphatic group denotes an alkyl group, a substituted alkyl group, an alkenyl group, a substituted alkenyl group, an alkynyl group, a substituted alkynyl group, an aralkyl group, or a substituted aralkyl group. The aliphatic group may have a branch or form a ring. The number of carbon atoms of the aliphatic group is preferably 1 to 20, and more preferably 1 to 18. The aryl moiety of the aralkyl group and the substituted aralkyl group is preferably phenyl or naphthyl, and particularly preferably phenyl. Examples of the substituents of the alkyl moieties of the substituted alkyl group, the substituted alkenyl group, the substituted alkynyl group, and the substituted aralkyl group include the substituents cited for explanation of $R^1$ to $R^4$. Examples of the substituents of the aryl moiety of the substituted aralkyl group are the same as those of the substituent of the substituted aryl group below.

In the present specification, the aromatic group means an aryl group and a substituted aryl group. The aryl group is preferably phenyl or naphthyl, and particularly preferably phenyl. The aryl moiety of the substituted aryl group is the same as that of the above-mentioned aryl group. Examples of the substituent of the substituted aryl group include substituents cited for explanation of $R^1$ to $R^4$.

In Formulae (1) and (2) above, A denotes $-NR^5R^6$ or a hydroxyl group, and $R^5$ and $R^6$ independently denote a hydrogen atom, an aliphatic group, an aromatic group, or a heterocyclic group. A is preferably $-NR^5R^6$. $R^5$ and $R^6$ may be bonded together to form a ring. $R^5$ and $R^6$ preferably each denote a hydrogen atom, an alkyl group, a substituted alkyl group, an aryl group, or a substituted aryl group, and most preferably a hydrogen atom, an alkyl group having 1 to

18 carbon atoms, or a substituted alkyl group having 1 to 18 carbon atoms.

In Formulae (1) and (2) above, $B^1$ denotes $=C(R^3)-$ or $=N-$, and $B^2$ denotes $-C(R^4)=$ or $-N=$. It is preferable that $B^1$ and $B^2$ are not $-N=$ at the same time, and it is more preferable that $B^1$ is $=C(R^3)-$ and $B^2$ is $-C(R^4)=$. Any of $R^1$ and $R^5$, $R^3$ and $R^6$, and $R^1$ and $R^2$ may be bonded together to form an aromatic ring or a hetero ring.

In Formula (1) above, Y denotes an unsaturated heterocyclic group. Y is preferably a five-membered or six-membered unsaturated hetero ring. The hetero ring may be condensed with an aliphatic ring, an aromatic ring, or another hetero ring. Examples of the hetero atom of the hetero ring include N, O, and S.

Preferred examples of the above-mentioned unsaturated hetero ring include a pyrazole ring, an imidazole ring, a thiazole ring, an isothiazole ring, a thiadiazole ring, a thiophene ring, a benzothiazole ring, a benzoxazole ring, a benzoisothiazole ring, a pyrimidine ring, a pyridine ring, and a quinoline ring. It is also possible for the unsaturated heterocyclic group to have a substituent cited above as $R^1$ to $R^4$.

In Formula (2) above, X denotes a color photographic coupler residue. Preferred examples of the color photographic coupler residue are as follows.

Yellow couplers: couplers represented by Formulae (I) and (II) in US Pat. Nos. 3, 933, 501, 4,022,620, 4,326,024, 4, 401, 752, and 4, 248, 961, JP-B-58-10739, GB Pat. Nos. 1,425,020 and 1,476,760, US. Pat. Nos. 3,973,968, 4,314,023, and 4,511,649, and EP Pat. Nos. 249,473A and 502,424A; couplers represented by Formulae (1) and (2) in EP Pat. No. 513,496A (in particular, Y-28 on page 18); couplers represented by Formula (I) of Claim 1 in EP Pat. No. 568,037A; couplers represented by Formula (I) of lines 45 to 55 in Column 1 in US Pat. No. 5,066,576; couplers represented by Formula (I) in Paragraph 0008 in JP-A-4-274425; couplers of Claim 1 on page 40 in EP Pat. No. 498,381A1 (in particular, D-35 on page 18); couplers represented by Formula (Y) on page 4 in EP Pat. No. 447,969A1 (in particular, Y-1 (page 17) and Y-54 (page 41)); and couplers represented by Formulae (II) to (IV) on lines 36 to 58 of Column 7 in US Pat. No. 4,476,219 (in particular, II-17 and 19 (Column 17), and 11-24 (Column 19)).

As a yellow dye, there can be cited ketoimine type dyes obtained from the above-mentioned couplers. Dyes described in JP-A-2001-294773, JP-A-2002-121414, JP-A-2002-105370, JP-A-2003-26974, and JP-A-2003-73598 are preferable; in particular, pyrazole compounds represented by Formula (Y-II) described in JP-A-2003-73598 are more preferably used, and Y-1 below can be cited as an example.

(Y-1)

Chem. 17

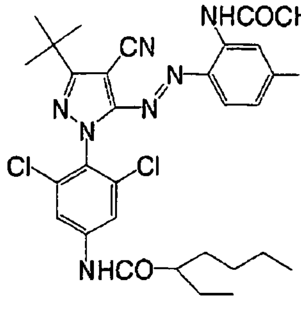

Magenta couplers: US Pat. Nos. 4,310,619 and 4,351,897, EP Pat. No. 73,636, US Pat. Nos. 3,061,432 and 3,725,067, Research Disclosure No. 24220 (June, 1984) and No. 24230 (June, 1984), JP-A-60-33552, JP-A-60-43659, JP-A-61-72238, JP-A-60-35730, JP-A-55-118034, JP-A-60-185951, US Pat. Nos. 4,500,630, 4,540,654, and 4,556,630, WO88/04795, JP-A-3-39737 (L-57 (page 11, lower right), L-68 (page 12, lower right), L-77 (page 13, lower right)), EP Pat. No. 456,257 [A-4]-63 (p. 134), [A-4]-73, -75 (p. 139), EP Pat. No. 486,965 M-4, -6 (p. 26), M-7 (p. 27), EP Pat. No. 571,959A M-45 (p. 19), JP-A-5-204106 M-1 (p. 6), and JP-A-4-362631 paragraph No. 0237, M-22, and US Pat. Nos. 3,061,432 and 3,725,067.

Cyan coupler: US Pat. Nos. 4,052,212, 4,146,396, 4,228,233, and 4,296,200, EP Pat. No. 73,636, JP-A-4-204843, CX-1, 3, 4, 5, 11, 12, 14, 15 (pp. 14 to 16); JP-A-4-43345 C-7, 10 (p. 35), 34, 35 (p. 37), (I-1), (I-17) (pp. 42 to 43); and couplers represented by Formula (Ia) or (Ib) of Claim 1 in JP-A-6-67385.

In addition, couplers described in JP-A-62-215272 (p. 91), JP-A-2-33144 (p. 3, p. 30), and EP 355,660A (p. 4, p. 5, p. 45, p. 47) are also useful.

Among the oil-soluble dyes represented by Formula (1) above, the magenta dyes particularly preferably used

are dyes represented by Formula (3) below.

Chem. 18

Formula (3)

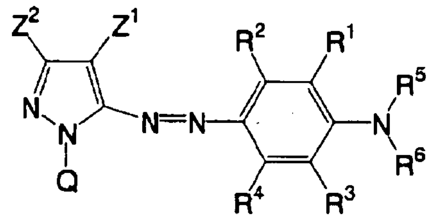

In Formula (3) above, $Z^1$ denotes an electron-attracting group having a Hammett substituent constant σp value of equal to or greater than 0.20. $Z^1$ is preferably an electron-attracting group having a σp value of at least 0.30 but no greater than 1.0. Preferred specific examples of the substituent include electron-attracting substituents that are described later, and among them an acyl group having 2 to 12 carbons, an alkyloxy carbonyl group having 2 to 12 carbons, a nitro group, a cyano group, an alkylsulfonyl group having 1 to 12 carbons, an arylsulfonyl group having 6 to 18 carbons, a carbamoyl group having 1 to 12 carbons, and a haloalkyl group having 1 to 12 carbons are preferable. A cyano group, an alkylsulfonyl group having 1 to 12 carbons, and an arylsulfonyl group having 6 to 18 carbons are particularly preferable, and a cyano group is most preferable.

In Formula (3) above, $Z^2$ denotes a hydrogen atom, an aliphatic group, or an aromatic group.

In Formula (3) above, $R^1$ to $R^6$ are the same as the corresponding ones of Formula (1) above.

In Formula (3) above, Q denotes a hydrogen atom, an aliphatic group, an aromatic group, or a heterocyclic group. Among them, Q is preferably a group formed from a group of non-metal atoms necessary to form a 5- to 8-membered ring. Among them an aromatic group and a heterocyclic group are particularly preferable. The 5- to 8-membered ring may be substituted, may be a saturated ring, or may have an unsaturated bond. Preferred examples of the non-metal atom include a nitrogen atom, an oxygen atom, a sulfur atom, and a carbon atom. Specific examples of such ring structures include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzoimidazole ring, an oxazole ring, a benzoxazole ring, an oxane ring, a sulfolane ring, and a thiane ring, and in a case where these rings have a further substituent, examples of the substituent include groups cited as examples of substituents $R^1$ to $R^4$ in Formula (1) above.

Preferred structures of the compounds represented by Formula (3) above are described in JP-A-2001-335714.

Among the dyes represented by Formula (2) above, the magenta dye particularly preferably employs a dye represented by Formula (4) below.

Chem. 19

Formula (4)

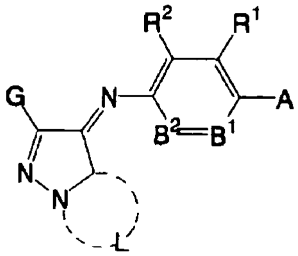

In Formula (4) above, G denotes a hydrogen atom, an aliphatic group, an aromatic group, a heterocyclic group, a cyano group, an alkoxy group, an aryloxy group, an alkylthio group, an arylthio group, an ester group, an amino group, a carbamoyl group, a sulfonyl group, a sulfamoyl group, a ureido group, a urethane group, an acyl group, an amide group, or a sulfonamide group.

In Formula (4) above, $R^1$, $R^2$, A, $B^1$, and $B^2$ are the same as the corresponding ones of Formula (2) above, and preferred ranges are also the same.

In Formula (4) above, L denotes an atomic group forming a five-membered or six-membered nitrogen-containing hetero ring, which may be substituted with at least one of an aliphatic group, an aromatic group, a heterocyclic group, a cyano group, an alkoxy group, an aryloxy group, an alkylthio group, an arylthio group, an ester group, an amino group, a carbamoyl group, a sulfonyl group, a sulfamoyl group, a ureido group, a urethane group, an acyl group, an amide group, and a sulfonamide group, and this hetero ring may further form a condensed ring with another ring.

With regard to compounds represented by Formula (4) above, A is preferably $-NR^5R^6$, and L preferably forms a five-membered nitrogen-containing hetero ring; examples of the five-membered nitrogen-containing hetero ring include an imidazole ring, a triazole ring, and a tetrazole ring.

Examples of the magenta dye include dyes described in JP-A-2002-121414, JP-A-2002-105370, JP-A-2003-12981, and JP-A-2003-26974.

Among the dyes represented by Formula (1) and Formula (2) above, compound examples (M0, M-1 to 6, a-21 to 25) for a magenta dye are shown below, but these are only for explaining the present invention in detail, and the present invention should not be construed as being limited thereto.

In the present invention, M0, M-4, M-6, or a-21 may be used, and M-4, M-6, and a-21 are particularly preferable.

Furthermore, pyrazolotriazole azomethine compounds represented by Formula (III) described in JP-A-2002-121414 are preferable, and M-1 below can be cited as an example.

Chem. 20

M0

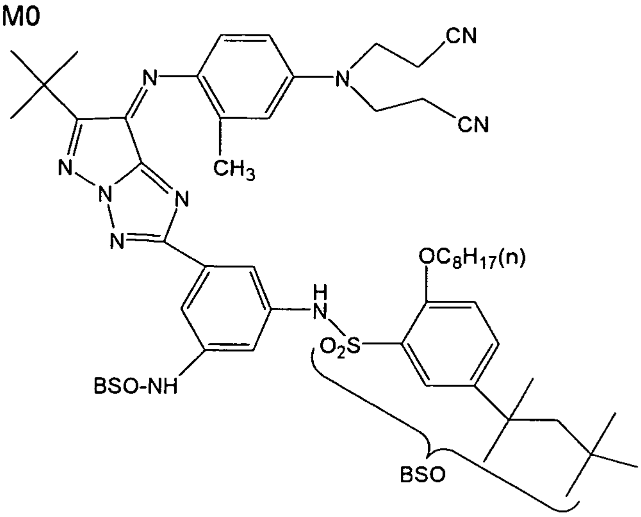

Chem. 21

M − 1

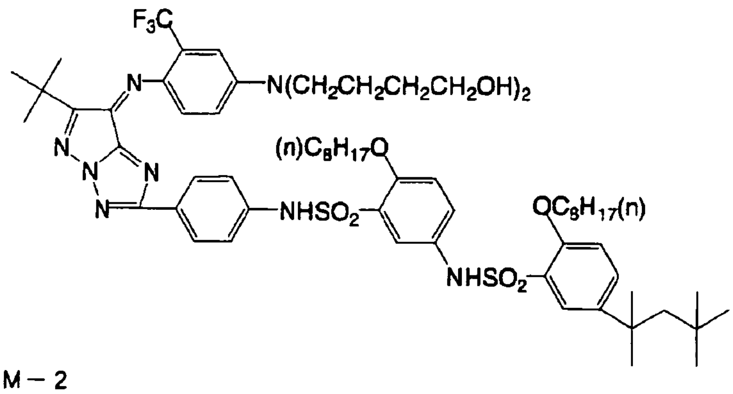

M − 2

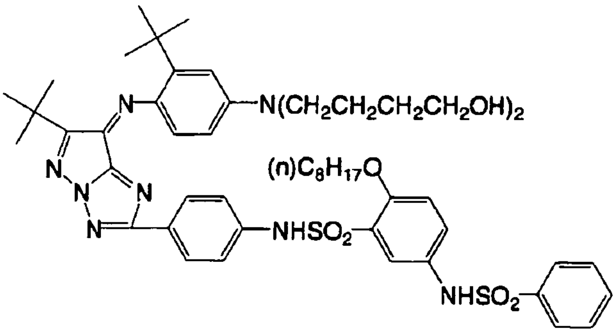

M − 3

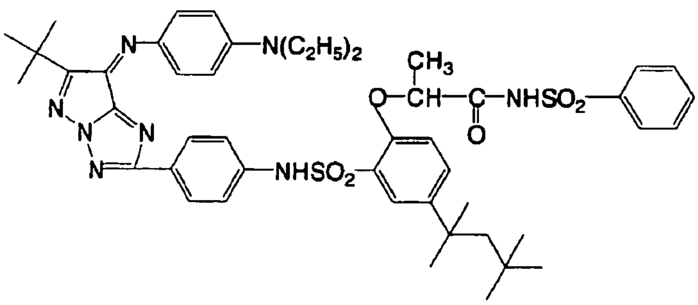

Chem. 22

M − 4

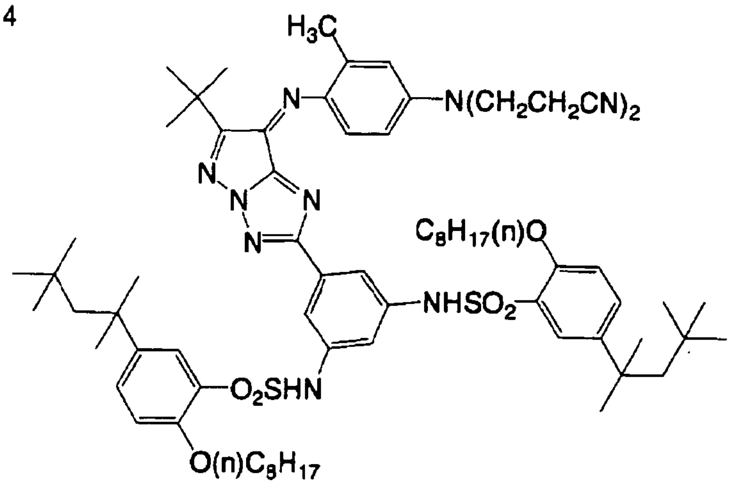

M − 5

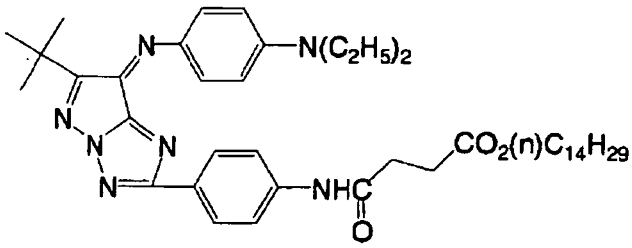

M − 6

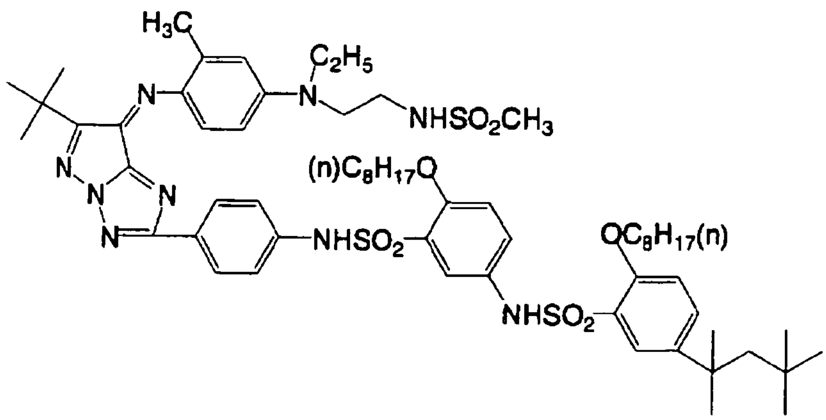

Table 1

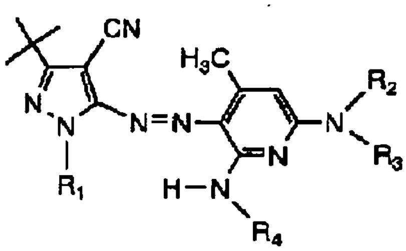

| Dye | $R_1$ | $R_2$ | $R_3$ | $R_4$ |
|---|---|---|---|---|
| a-21 | A | A | 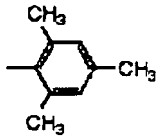 | 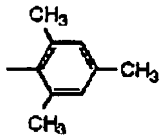 |
| a-22 | 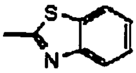 | A | 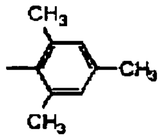 | 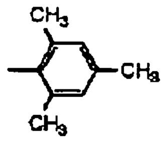 |
| a-23 | 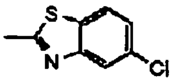 | B | 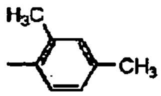 | 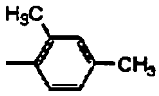 |
| a-24 | 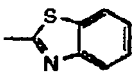 | 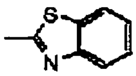 | 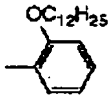 | 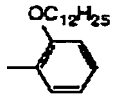 |
| a-25 | 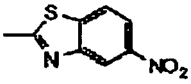 | C | 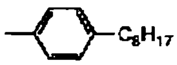 | $C_8H_{17}(t)$ |

A: 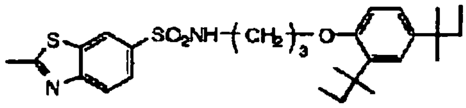

B: 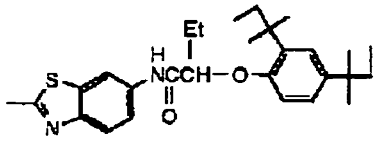

C: 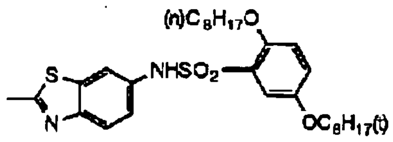

Other compound examples of the colorant that can be used in the present invention include those described in JP-A-2001-240763, 2001-181549, and JP-A-2001-335714, but the present invention should not be construed as being limited thereto.

The compound represented by Formula (3) above may be synthesized by reference to a method described in, for example, JP-A-2001-335714 or JP-A-55-161856. The compound represented by Formula (4) above may be synthesized by reference to a method described in, for example, JP-A-4-126772, JP-B-7-94180, or JP-A-2001-240763.

Among the dyes represented by Formula (2) above, as a cyan dye a pyrrolotriazole azomethine dye represented by Formula (5) below is particularly preferably used.

Chem. 23

Formula (5)

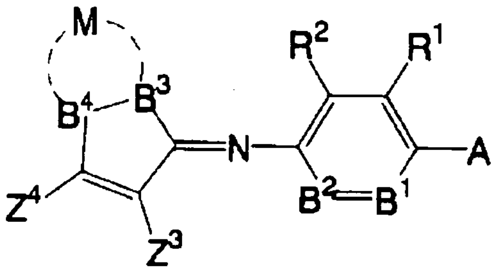

In Formula (5) above, A, $R^1$, $R^2$, - $B^1$, and $B^2$ are the same as the corresponding ones of Formula (2) above, and preferred ranges thereof are also the same.

In Formula (5) above, $Z^3$ and $Z^4$ are independently the same as G in Formula (4) above. $Z^3$ and $Z^4$ may be bonded together to form a ring structure. One in which $Z^3$ is an electron-attracting group having a Hammett substituent constant σp value of equal to or greater than 0.30 exhibits a sharp absorption and is more preferable. Moreover, one in which $Z^3$ is an electron-attracting group having a Hammett substituent constant σp value of equal to or greater than 0.45 is more preferable, and an electron-attracting group having a Hammett substituent constant σp value of equal to or greater than 0.60 is most preferable. Furthermore, one in which the sum of the Hammett substituent constant σp values of $Z^3$ and $Z^4$ is equal to or greater than 0.70 exhibits a cyan color and excellent hue, and is more preferable.

In Formula (5) above, M is an atomic group forming a 1,2,4-triazole ring that is condensed with the 5-membered ring of Formula (5) above; either one of the two atoms $B^3$ and $B^4$ at the sites of condensation with the 5-membered ring is a nitrogen atom, and the other is a carbon atom.

The compound represented by Formula (5) above is preferably used as a cyan dye, but it may be used as a magenta dye by changing a substituent.

The Hammett substituent constant σp value used in the present specification is now explained. The Hammett rule is an empirical rule proposed by L. P. Hammett in 1935 in order to quantitatively deal with the influence of a substituent on a reaction or equilibrium of a benzene derivative, and the validity thereof is currently widely recognized. A σp value and a σm value are required for the substituent constant in the Hammett rule, and details of these values can be referred to in many general books, for example, 'Lange's Handbook of Chemistry', Ed. by J. A. Dean, 12th edition, 1979 (Mc Graw-Hill) or 'Kagakuno Ryouiki' (Journal of Japanese Chemistry), special issue, 122, pp. 96 to 103, 1979 (Nankodo Co., Ltd.). In the present invention, the substituents are limited or explained using the Hammett substituent constant σp, but this does not mean that they are limited to substituents whose values are described in published references, and a substituent whose value is not published in the references but is included in the range if it is measured in accordance with the Hammett rule is of course included. Among Formulae (1) to (5) above, those that are not benzene derivatives are also included, but the σp value is used as a scale showing the electronic effect of the substituent, irrespective of the position of substitution. The σp value in the present invention is used with the above-mentioned meaning.

Examples of electron-attracting groups having a Hammett substituent constant σp value of equal to or greater than 0.60 include a cyano group, a nitro group, an alkylsulfonyl group (e.g. a methanesulfonyl group), and an arylsulfonyl group (e.g. a benzenesulfonyl group). Examples of electron-attracting groups having a Hammett σp value of equal to or greater than 0.45 include, in addition to the above, an acyl group (e.g. an acetyl group), an alkoxycarbonyl group (e.g. a dodecyloxycarbonyl group), an aryloxycarbonyl group (e.g. m-chlorophenoxycarbonyl), an alkylsulfinyl group (e.g. *n*-propylsulfinyl), an arylsulfinyl group (e.g. phenylsulfinyl), a sulfamoyl group (e.g. N-ethylsulfamoyl, *N,N*-dimethylsulfamoyl), and a haloalkyl group (e.g. trifluoromethyl).

Examples of electron-attracting groups having a Hammett substituent constant σp value of equal to or greater than 0.30 include, in addition to the above, an acyloxy group (e.g. acetoxy), a carbamoyl group (e.g. N-ethylcarbamoyl, *N,N*-dibutylcarbamoyl), a haloalkoxy group (e.g. trifluoromethyloxy), a haloaryloxy group (e.g. pentafluorophenyloxy), a sulfonyloxy group (e.g. a methylsulfonyloxy group), a haloalkylthio group (e.g. difluoromethylthio), an aryl group substituted with two or more electron-attracting groups having a σp value of equal to or greater than 0.15 (e.g. 2,4-dinitrophenyl, pentachlorophenyl), and a hetero ring (e.g. 2-benzooxazolyl, 2-benzothiazolyl, 1-phenyl-2-benzimidazolyl). Specific examples of electron-attracting groups having a σp value of equal to or greater than 0.20 include, in addition to the above, a halogen atom.

As the cyan dye, dyes described in JP-A-2002-121414, JP-A-2002-105370, JP-A-2003-3109, and JP-A-2003-26974 can also be used preferably.

Pyrrolotriazole azomethine compounds represented by Formula(IV-1a) and phthalocyanine compounds represented by Formulae (C-II-1) and (C-II-2) described in JP-A-2002-121414 are preferably used, and C-1 and C-101 below can be cited as examples.

Chem. 24

C-1

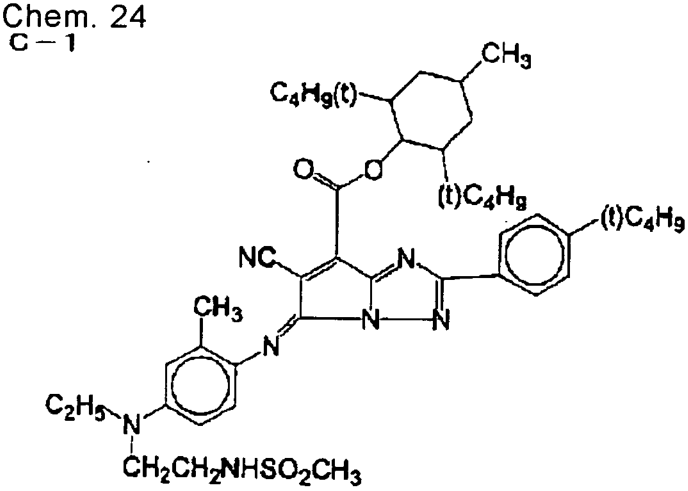

Chem. 25

(C-101)

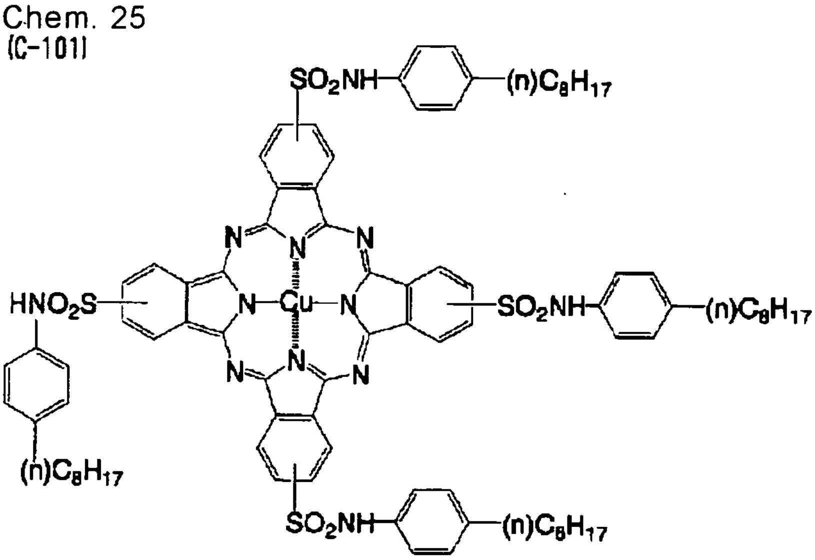

Furthermore, in the present invention, an oil-soluble dye represented by Formula (A-I) below can be used preferably.

Chem. 26

Formula (A-I)

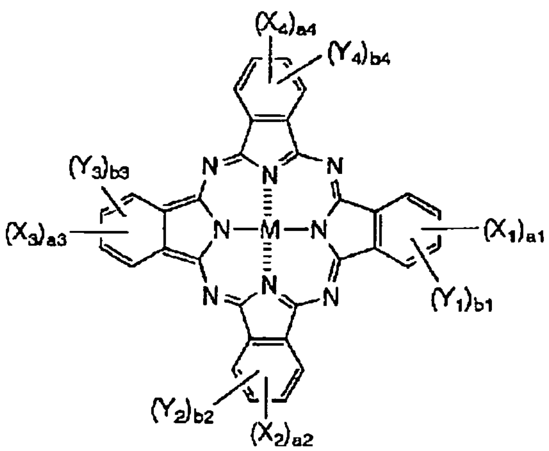

In Formula (A-I): $X_1$, $X_2$, $X_3$, and $X_4$ independently denote a group selected from -SO-Z, -$SO_2$-Z, -$SO_2NR_1R_2$, -$CONR_1R_2$, -$CO_2R_1$, and a sulfo group. Here, Z denotes a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. $R_1$ and $R_2$ independently denote a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, provided that $R_1$ and $R_2$ are not both hydrogen atoms. M denotes a hydrogen atom, a metal element, a metal oxide, a metal hydroxide, or a metal halide. $Y_1$, $Y_2$, $Y_3$, and $Y_4$ independently denote a hydrogen atom or a monovalent substituent. $a_1$ to $a_4$ and $b_1$ to $b_4$ denote the numbers of $X_1$ to $X_4$ and $Y_1$ to $Y_4$, and independently denote an integer of 0 to 4, provided that the sum total of $a_1$ to $a_4$ is equal to or greater than 2.

Among the oil-soluble dyes represented by Formula (A-I) above, an oil-soluble dye represented by Formula (A-II) below may particularly preferably be used.

Chem. 27

Formula (A-II)

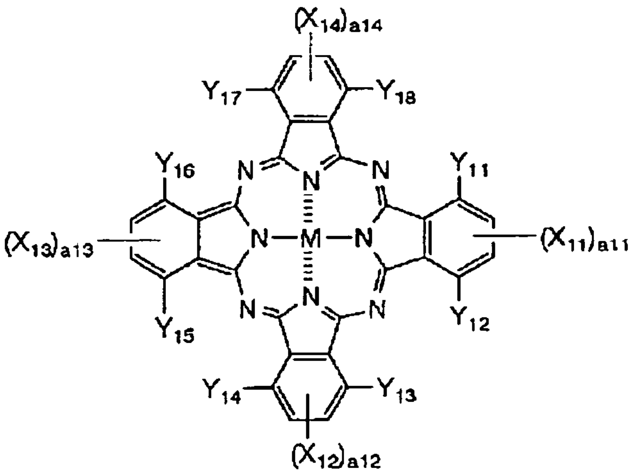

In Formula (A-II): $X_{11}$ to $X_{14}$, $Y_{11}$ to $Y_{18}$, and M are the same as $X_1$ to $X_4$, $Y_1$ to $Y_4$, and M in Formula (A-I) respectively. $a_{11}$ to $a_{14}$ independently denote an integer of 1 or 2.

As a specific example of Formula (A-II) above, a compound example (AII-17) is cited, but this is for explaining the present invention in detail, and the present invention should not be construed as being limited thereto.

Table 2

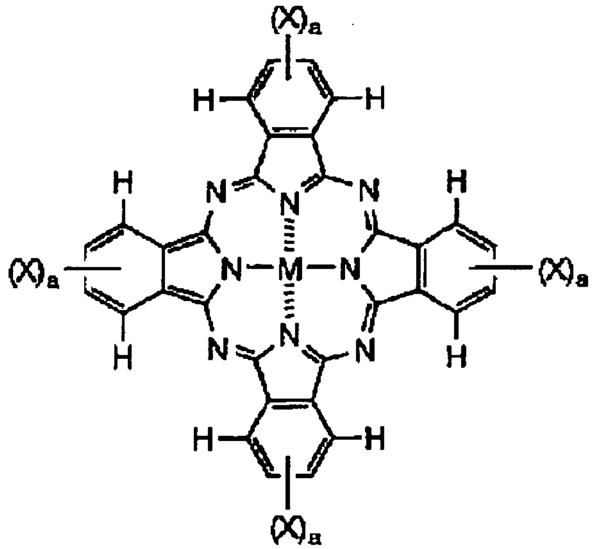

| Compound No. | M | X | a |
|---|---|---|---|
| AII-17 | Cu | 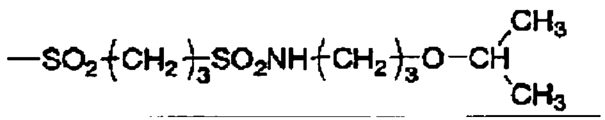 | 1 |
| AII-18 | Cu | 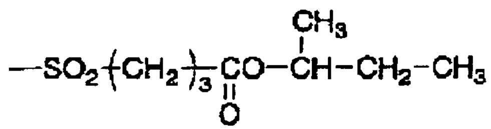 | 1 |
| AII-19 | Cu | 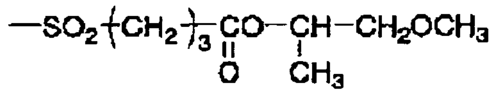 | 1 |

Table continued

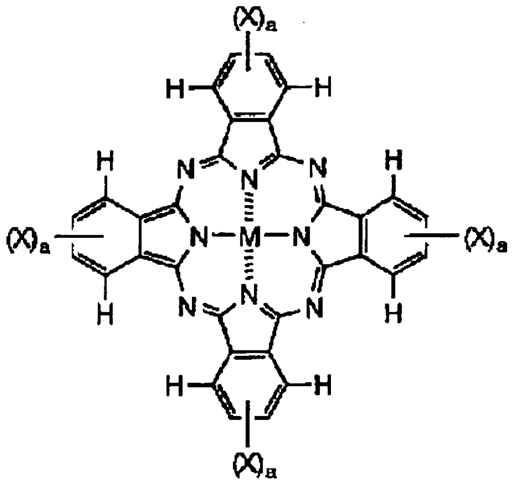

| Compound No. | M | X | a |
|---|---|---|---|
| AII-20 | Cu | 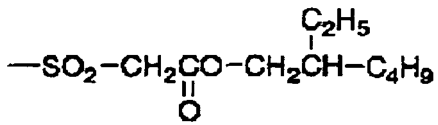 | 1 |
| AII-21 | Cu | 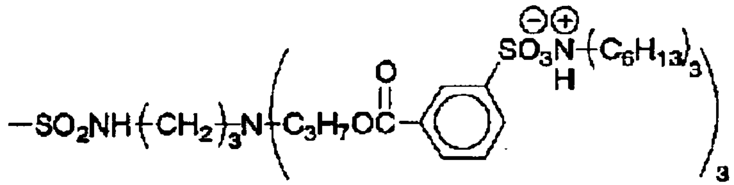 | 1 |
| AII-22 | Cu | 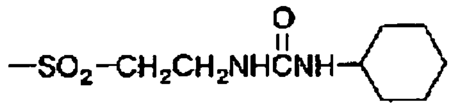 | 1 |
| AII-23 | Cu | 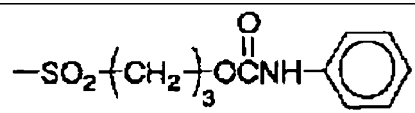 | 1 |

In the present invention, it is preferable to use an oil-soluble dye having an oxidation potential that is more noble than 1.0 V (SCE). The more noble the oxidation potential, the more preferable it is; it is more preferable to use one having an oxidation potential more noble than 1.1 V (SCE), and it is most preferable to use one having an oxidation potential more noble than 1.2 V (SCE).

The oxidation potential value (Eox) can be easily measured by one skilled in the art and a method therefor is described in, for example, P. Delahay, 'New Instrumental Methods in Electrochemistry', Interscience Publishers (1954), A. J. Bard et al., 'Electrochemical Methods', John Wiley & Sons (1980), and Akira Fujishima et al., 'Denkikagaku Sokuteihou' (Electrochemical Measurement Methods), Gihodo Shuppan Sha (1984).

More specifically, a test sample is dissolved to give a concentration of 1 x $10^{-4}$ to 1 x $10^{-6}$ mol/L in a solvent such as dimethylformamide or acetonitrile containing a supporting electrolyte such as sodium perchlorate or tetrapropylammonium perchlorate, an oxidation wave when sweeping toward the oxidation side (noble side) using carbon (GC) as a working electrode and a rotating platinum electrode as the counter electrode using cyclic voltammetry or direct current polarographic equipment is approximated to a straight line, and the oxidation potential of the midpoint of a line segment formed between an intersection point of the straight line and a residual current/potential straight line and an intersection point of the straight line and a saturated current straight line (or an intersection point with a straight line parallel to the ordinate passing through the potential peak value) is measured as a value relative to the SCE (saturated calomel electrode). This value sometimes deviates by on the order of tens of millivolts due to the effect of a liquid junction potential, the liquid resistance of the sample solution, or the like, but the reproducibility of the potential can be guaranteed by adding a standard sample (for example, hydroquinone). The support electrolyte and solvent used may be selected appropriately according to the oxidation potential and the solubility of the test sample. The support electrolyte and solvent that can be used here may be referred to in Akira Fujishima et al., 'Denkikagaku Sokuteihou' (Electrochemical Measurement Methods), Gihodo Shuppan Sha (1984), pp. 101 to 118.

In the concentration range of the above-mentioned measurement solvent and a phthalocyanine compound sample, the oxidation potential of a disassociated state is measured.

The value of Eox represents the ease of electron transfer from a sample to an electrode; the larger the value (the more noble the oxidation potential), the more difficult it is for electrons to transfer from the sample to the electrode, in other words, the more difficult it is to oxidize.

If a dye having a low oxidation potential is used, polymerization is greatly inhibited by the dye, and the curability is degraded. When a dye having a noble oxidation potential is used, there is hardly any inhibition of polymerization.

A black dye can be used as necessary in addition to the three CMY primaries. The black dye can be made by mixing the three CMY dyes.

With regard to dyes other than the above, those generally used in the field of printing technology (for example, printing inks, heat-sensitive inkjet recording, and color proofing plates or colorants for copying in electrophotographic recording etc.) can be used.

Examples thereof include dyes described in 'Senryo Binran' (Dye handbook) Ed. by The Society of Synthetic Organic Chemistry, Japan, Maruzen Co., Ltd. (1970), 'Kaisetsu Senryokagaku' (Explanation of Dye Chemistry), T. Abeta and K. Imada, Shikisensha Co., Ltd. (1988), 'Shikiso Handobukku' (Colorant Handbook), Ed. by S. Ogawara, Kodansha Ltd. (1986), 'Inkujetto Purinta You Kemikarusu' (Inkjet Printer Chemicals - Survey of Materials Development Trends and Prospects-), CMC Publishing Co., Ltd. (1997), 'Inkujetto Purinta' (Inkjet Printers-Technology and Materials), T. Amari, CMC Publishing Co., Ltd. (1998), etc. Pigment

The pigment is not particularly limited, and it is possible to use any generally commercially available organic pigment or inorganic pigment, a dispersion of a pigment in an insoluble resin, etc. as a dispersion medium, a pigment on the surface of which a resin has been grafted, etc. It is also possible to use resin particles colored with a dye, etc.

In the present invention, in order to color the outer surface of a model, a color image is formed on the outline of a cross-sectional shape using the above-mentioned YMC binders, and a white reflection layer is preferably provided directly below this color image. The white reflection layer has a role corresponding to, for example, the background of a color print, and it is preferable to use a binder containing a white pigment (white binder) immediately inside the color image.

Specific examples of the white pigment that can be used include basic lead carbonate ($2PbCO_3Pb(OH)_2$, also known as silver white), zinc oxide (ZnO, also known as zinc white), titanium oxide ($TiO_2$, also known as titanium white), and strontium titanate ($SrTiO_3$, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) according to the type of powder material and binder component.

In the present invention, it is possible to use CMY pigments instead of the CMY dyes.

Specific examples of the organic pigment and the inorganic pigment include, as those exhibiting a yellow color,

monoazo pigments such as Cl Pigment Yellow 1 (Fast Yellow G, etc.) and Cl Pigment Yellow 74, disazo pigments such as Cl Pigment Yellow 12 (Disazo Yellow AAA, etc.) and Cl Pigment Yellow 17, benzidine-free azo pigments such as Cl Pigment Yellow 180, azo lake pigments such as Cl Pigment Yellow 100 (Tartrazine Yellow Lake, etc.), condensed azo pigments such as Cl Pigment Yellow 95 (Azo Condensation Yellow GR, etc.), acidic dye lake pigments such as Cl Pigment Yellow 115 (Quinoline Yellow Lake, etc.), basic dye lake pigments such as Cl Pigment Yellow 18 (Thioflavine Lake, etc.), anthraquinone pigments such as Flavanthrone Yellow (Y-24), isoindolinone pigment such as Isoindolinone Yellow 3RLT (Y-110), quinophthalone pigments such as Quinophthalone Yellow (Y-138), isoindoline pigments such as Isoindoline Yellow (Y-139), nitroso pigments such as Cl Pigment Yellow 153 (Nickel Nitroso Yellow, etc.), and metal complex azomethine pigments such as Cl Pigment Yellow 117 (Copper Azomethine Yellow, etc.).

Examples of pigments exhibiting a magenta color include monoazo pigments such as Cl Pigment Red 3 (Toluidine Red, etc.), disazo pigments such as Cl Pigment Red 38 (Pyrazolone Red B, etc.), azo lake pigments such as Cl Pigment Red 53:1 (Lake Red C, etc.) and Cl Pigment Red 57:1 (Brilliant Carmine 6B), condensed azo pigments such as Cl Pigment Red 144 (Azo Condensation Red BR, etc.), acidic dye lake pigments such as Cl Pigment Red 174 (Phloxine B Lake, etc.), basic dye lake pigments such as Cl pigment red 81 (Rhodamine 6G' Lake, etc.), anthraquinone pigments such as Cl Pigment Red 177 (Dianthraquinonyl Red, etc.), thioindigo pigments such as Cl Pigment Red 88 (Thioindigo Bordeaux, etc.), perinone pigments such as Cl Pigment Red 194 (Perinone Red, etc.), perylene pigments such as Cl Pigment Red 149 (Perylene Scarlet, etc.), quinacridone pigments such as Cl Pigment Red 122 (Quinacridone Magenta, etc.), isoindolinone pigments such as Cl Pigment Red 180 (Isoindolinone Red 2BLT, etc.), and alizarin lake pigments such as Cl Pigment Red 83 (Madder Lake, etc.).

Examples of pigments exhibiting a cyan color include disazo pigments such as Cl Pigment Blue 25 (Dianisidine Blue, etc.), phthalocyanine pigments such as Cl Pigment Blue 15 (Phthalocyanine Blue, etc.), acidic dye lake pigments such as Cl Pigment Blue 24 (Peacock Blue Lake, etc.), basic dye lake pigments such as Cl Pigment Blue 1 (Victoria Pure Blue BO Lake, etc.), anthraquinone pigments such as Cl Pigment Blue 60 (Indanthrone Blue, etc.), and alkali blue pigments such as Cl Pigment Blue 18 (Alkali Blue V-5:1).

## UV exposure

With regard to UV exposure for curing the UV-curing binder, a high-pressure mercury lamp, a low-pressure mercury lamp, a Deep UV lamp, a halogen lamp, etc., which are generally used, can be used, and the exposure wavelength is 450 to 250 nm, and preferably 400 to 300 nm. The exposure energy is preferably no greater than 500 $mJ/cm^2$, and more preferably 10 to 400 $mJ/cm^2$. UV light can be guided from the UV light source to the surface of a powder material using a UV-transparent optical fiber.

## Examples

The present invention is explained below with reference to Examples, but the present invention should not be construed as being limited to these Examples.

Materials used in Examples of the present invention are as follows.

## Polymerizable compound

KAYARAD DPCA60 (caprolactone-modified dipentaerythritol hexaacrylate; manufactured by Nippon Kayaku Co., Ltd.)
HDDA (1,6-hexanediol diacrylate; manufactured by Daicel-UCB Co., Ltd.)
Ethoxylated pentaerythritol tetraacrylate (manufactured by SARTOMER)
M350 (trimethylolpropane EO-modified triacrylate; manufactured by Toagosei Co., Ltd.)
IBOA (isobornyl acrylate; manufactured by Daicel-UCB Co., Ltd.)
M310 (trimethylolpropane PO-modified triacrylate; manufactured by Toagosei Co., Ltd.)
M309 (trimethylolpropane triacrylate; manufactured by Toagosei Co., Ltd.)
KAYARAD DPHA (dipentaerythritol hexaacrylate; manufactured by Nippon Kayaku Co., Ltd.)
TMPTMA (trimethylolpropane trimethacrylate; manufactured by Daicel-UCB Co., Ltd.)
DPHA (dipentaerythritol hexaacrylate; an in-house product)
PEG300 diacrylate (PAG300DA; manufactured by Daicel-UCB Co.; Ltd.)
Modified bisphenol A epoxy acrylate (Ebecryl 3701; manufactured by Daicel-UCB Co., Ltd.)
Aliphatic urethane acrylate (Ebecryl 270; manufactured by Daicel-UCB Co., Ltd.)
TMPTA (trimethylolpropane triacrylate; manufactured by Daicel-UCB Co., Ltd.)

TMPEOTA (trimethylolpropane ethoxytriacrylate; manufactured by Daicel-UCB Co., Ltd.)

Polymerization initiator

2-Hydroxy-2-methylpropiophenone (DAROCURE 1173; manufactured by Ciba Specialty Chemicals (Ciba S.C.))
1-Hydroxycyclohexylphenyl ketone (Irgacure 184; manufactured by Ciba S.C.)
Acylphosphine oxide compound (compound example (2)) (Lucirin TPO; manufactured by BASF)
Acylphosphine oxide compound (compound example (4)) (Lucirin TPO-L; manufactured by BASF)
Acylphosphine oxide compound (compound example (19)) (Irgacure 819; manufactured by Ciba Specialty Chemicals (Ciba S.C))
A 1:1 mixture of an acylphosphine oxide compound (compound example (22)) and 1-hydroxycyclohexyl phenyl ketone (Irgacure 1850; manufactured by Ciba S.C)

Pigment

Titanium oxide (KRONOS KA-15; particle size 0.4 μm; manufactured by Titan Kogyo Kabushiki Kaisha)

Powder material

Polymethyl methacrylate (MB20X-5; average particle size 5 μm; manufactured by Sekisui Plastics Co., Ltd.)

Example 1-1

| Preparation of UV-curinq binder 'colorless binder' | |
|---|---|
| Polymerizable compound: KAYARAD DPCA60 | 5.2 g |
| Polymerizable compound: HDDA | 14.8 g |
| Photopolymerization initiator: 2-hydroxy-2-methylpropiophenone | 0.6 g |

The above components were stirred and mixed to give a colorless transparent binder having a viscosity at 25°C of about 20 mPa·s.

| Preparation of UV-curing binder 'white binder' | |
|---|---|
| Polymerizable compound: KAYARAD DPCA60 | 5.2 g |
| Polymerizable compound: HDDA | 14.8 g |
| Photopolymerization initiator: 2-hydroxy-2-methylpropiophenone | 0.6 g |
| White pigment: titanium oxide | 3 g |

The above components were kneaded using a three roll mill to give a white binder having a viscosity at 25°C of about 25 mPa.s.

| Preparation of UV-curing binder 'yellow binder' | |
|---|---|
| Polymerizable compound: KAYARAD DPCA60 | 5.2 g |
| Polymerizable compound: HDDA | 14.8 g |
| Photopolymerization initiator: 1-hydroxycyclohexyl phenyl ketone | 0.5 g |
| Colorant: Y-1 | 0.8 g |

Y-1 above, and M-1 and C-1 below were as described in the 'Disclosure of the Invention' section.

The above components were stirred and mixed to give a yellow binder having a viscosity at 25°C of about 20 mPa·s.

| Preparation of UV-curinq binder 'maqenta binder' | |
|---|---|
| Polymerizable compound: KAYARAD DPCA60 | 5.2 g |
| Polymerizable compound: HDDA | 14.8 g |
| Photopolymerization initiator: 1-hydroxycyclohexyl phenyl ketone | 0.5 g |
| Colorant: M-1 | 0.8 g |

The above components were stirred and mixed to give a magenta binder having a viscosity at 25°C of about 20 mPa·s.

| Preparation of UV-curinq binder 'cyan binder' | |
|---|---|
| Polymerizable compound: KAYARAD DPCA60 | 5.2 g |
| Polymerizable compound: HDDA | 14.8 g |
| Photopolymerization initiator: 1-hydroxycyclohexyl phenyl ketone | 0.5 g |
| Colorant: C-1 | 0.8 g |

The above components were stirred and mixed to give a cyan binder having a viscosity at 25°C of about 20 mPa·s.

| Preparation of UV-curing binder 'black binder' | | |
|---|---|---|
| Polymerizable compound: KAYARAD DPCA60 | | 5.2 g |
| Polymerizable compound: HDDA | | 14.8 g |
| Photopolymerization initiator: 1-hydroxycyclohexyl phenyl ketone | | 0.5 g |
| Colorants: | Y-1 | 0.3 g |
| | M-1 | 0.2 g |
| | C-1 | 0.4g |

The above components were stirred and mixed to give a black binder having a viscosity at 25°C of about 20 mPa·s.

Preparation of three-dimensional model

As a powder material, polymethyl methacrylate (MB20X-5 average particle size 5 μm, manufactured by Sekisui Plastics Co., Ltd.) was laid using a rod to give one powder material layer having a thickness of about 100 μm, and the colored binders (yellow, magenta, cyan, and black), the white binder, and the colorless transparent binder were appropriately discharged via corresponding inkjet discharge nozzles according to coloration data.

Liquid droplets were discharged by an inkjet system employing these UV-curing binders as inks at a resolution of 600 dpi (dot gap about 42 μm) so as to make dots form a continuous line, while adjusting the amount of ink as necessary for a portion where strength was required. Subsequently, a powder material layer having a thickness corresponding to 1 slice pitch was further formed, the binders were supplied so as to match the required cross-sectional shape, and by repeating this a three-dimensional model was formed.

Example 1-2

A three-dimensional model was formed in the same manner as in Example 1 and evaluated except that

| | | |
|---|---|---|
| Polymerizable compound: | ethoxylated pentaerythritol tetraacrylate | 8.4g and |
| Polymerizable compound: | HDDA | 11.6 g |
| were used instead of | | |
| Polymerizable compound: | KAYARAD DPCA60 | 5.2 g and |
| Polymerizable compound: | HDDA | 14.8 g. |

Example 1-3

A three-dimensional model was formed in the same manner as in Example 1 and evaluated except that

| | | |
|---|---|---|
| Polymerizable compound: | M350 | 10.0 g and |
| Polymerizable compound: | IBOA | 10.0 g |
| were used instead of | | |
| Polymerizable compound: | KAYARAD DPCA60 | 5.2 g and |
| Polymerizable compound: | HDDA | 14.8 g. |

Example 1-4

A three-dimensional model was formed in the same manner as in Example 1 and evaluated except that

| | | |
|---|---|---|
| Polymerizable compound: | M350 | 5.0 g, |
| Polymerizable compound: | M310 | 5.0 g, |
| Polymerizable compound: | M309 | 5.0 g, and |
| Polymerizable compound: | IBOA | 5.0 g |
| were used instead of | | |
| Polymerizable compound: | KAYARAD DPCA60 | 5.2 g and |
| Polymerizable compound: | HDDA | 14.8 g. |

Example 1-5

A three-dimensional model was formed in the same manner as in Example 1 and evaluated except that

| | | |
|---|---|---|
| Polymerizable compound: | KAYARAD DPHA | 5.0 g, |
| Polymerizable compound: | TMPTMA | 15.0 g, and |
| methyl isobutyl ketone (MIBK) | | 2.0 g |
| were used instead of | | |
| Polymerizable compound: | KAYARAD DPCA60 | 5.2 g and |
| Polymerizable compound: | HDDA | 14.8 g. |

Comparative Example 1-1

A binder composition comprising

| | | |
|---|---|---|
| Polymerizable compound: | KAYARAD DPCA60 | 20.0 g |
| instead of | | |
| Polymerizable compound: | KAYARAD DPCA60 | 5.2 g and |
| Polymerizable compound: | HDDA | 14.8 g, |

was stirred and mixed to give a colorless transparent binder having a viscosity at 25°C of about 1,000 mPa·s.

However, it could not be discharged from an inkjet head in a normal manner, and no three-dimensional model was obtained.

Comparative Example 1-2

A binder composition was stirred and mixed in the same manner as in Example 5 using

| | | |
|---|---|---|
| Polymerizable compound: | KAYARAD DPHA | 5.0 g |
| Polymerizable compound: | TMPTMA | 15.0 g, and |
| methyl isobutyl ketone | | 2.0 g |

from Example 5, except that methyl isobutyl ketone was not used, and a colorless transparent binder having a viscosity at 25°C of about 160 mPa·s was obtained.

However, it could not be discharged from an inkjet head in a normal manner, and no three-dimensional model was obtained.

The results for the above are summarized in Table 3 below.

Table 3

| No. | Polymerizable compound (g) | | Viscosity (mPa.s) (25°C) | | Inkjet discharge properties | Texture |
|---|---|---|---|---|---|---|
| | | | Colorless binder Colored binder | White binder | | |
| Ex. 1-1 | DPCA60<br>HDDA | 5.2<br>14.8 | 20 | 25 | A | A |
| Ex. 1-2 | Ethoxylated tetraacrylate<br><br>HDDA | pentaerythritol<br>8.4<br>11.6 | 20 | 24 | A | A |
| Ex. 1-3 | M350<br>IBOA | 10.0<br>10.0 | 16 | 19 | A | A |
| Ex. 1-4 | M350<br>M310<br>M309<br>IBOA | 5.0<br>5.0<br>5.0<br>5.0 | 35 | 38 | A | A |
| Ex. 1-5 | DPHA<br>TMPTMA<br>MIBK | 5.0<br>15.0<br>2.0 | 40 | 44 | A | A |
| Comp. Ex. 1-1 | DPCA60 | 20.0 | 1000 | 1020 | C | - |
| Comp. Ex. 1-2 | DPHA<br>TMPTMA | 5.0<br>15.0 | 160 | 168 | C | - |

The inkjet discharge properties were ranked as follows.

Inkjet discharge properties

A: Discharged in a normal manner.
C: Clogging occurred, and could not be discharged.

A sensory evaluation of the texture was carried out, and was ranked as follows.

Texture

A: Good

B: Fair

C: Poor

Measurement of viscosity

The viscosity of the binders used in the Examples was measured using a model E viscometer (VISCONIC ELD, manufactured by Tokyo Keiki Co., Ltd.) at 25°C and 10 rpm.
The viscosity of the binders used in the Comparative Examples was measured in the same manner as for the binders of the Examples except that the rotational speed was changed to 0.5 rpm for Comparative Example 1-1 and 2.5 rpm for Comparative Example 1-2.

Example 2-1

Preparation of UV-curing binder 'colorless binder'

| | |
|---|---|
| Polymerizable compound: KAYARAD DPCA60 | 10 g |
| Polymerizable compound: IBOA | 10 g |
| Photopolymerization initiator: 2-hydroxy-2-methylpropiophenone | 0.6 g |

Preparation of UV-curing binder 'white binder'

| | |
|---|---|
| Polymerizable compound: KAYARAD DPCA60 | 10 g |
| Polymerizable compound: IBOA | 10 g |
| Photopolymerization initiator: 2-hydroxy-2-methylpropiophenone | 0.6 g |
| White pigment: titanium oxide | 3 g |

The above components were kneaded using a three roll mill to give a white binder.

Preparation of UV-curinq binder 'yellow binder'

| | |
|---|---|
| Polymerizable compound: KAYARAD DPCA60 | 10 g |
| Polymerizable compound: IBOA | 10 g |
| Photopolymerization initiator: 1-hydroxycyclohexyl phenyl ketone | 0.5 g |
| Colorant: Y-1 | 0.8 g |

Y-1 above, and M-1 and C-1 below were as described in the 'Disclosure of the Invention' section.
The above components were stirred and mixed to give a yellow binder.

Preparation of UV-curing binder 'magenta binder'

| | |
|---|---|
| Polymerizable compound: KAYARAD DPCA60 | 10 g |
| Polymerizable compound: IBOA | 10 g |
| Photopolymerization initiator: 1-hydroxycyclohexyl phenyl ketone | 0.5 g |
| Colorant: M-1 | 0.8 g |

The above components were stirred and mixed to give a magenta binder.

Preparation of UV-curinq binder 'cyan binder'

| | |
|---|---|
| Polymerizable compound: KAYARAD DPCA60 | 10 g |
| Polymerizable compound: IBOA | 10 g |
| Photopolymerization initiator: 1-hydroxycyclohexyl phenyl ketone | 0.5 g |
| Colorant: C-1 | 0.8 g |

The above components were stirred and mixed to give a cyan binder.

| Preparation of UV-curing binder 'black binder' | | |
|---|---|---|
| Polymerizable compound: KAYARAD DPCA60 | | 10 g |
| Polymerizable compound: IBOA | | 10 g |
| Photopolymerization initiator: 1-hydroxycyclohexyl phenyl ketone | | 0.5 g |
| Colorants: | Y-1 | 0.3 g |
| | M-1 | 0.2 g |
| | C-1 | 0.4g |

The above components were stirred and mixed to give a black binder.

Formation of three-dimensional model

A three-dimensional model was formed in the same manner as in Example 1-1.

Evaluation method

A cubic model having a length, width, and height all of 3 cm formed by the above-mentioned method was used as a reference.

A sensory evaluation of the smoothness of the surface was carried out by touching by hand and used as a reference for the texture.

Measurement method for percentage shrinkage during curing

After a composition was allowed to stand in a constant temperature bath at 25°C, a liquid specific gravity D1 was measured using a hydrometer. Subsequently, the composition was sandwiched between glass plates so as to give a coating thickness of 100 μm, and irradiated using a metal halide lamp at about 1 J/cm$^2$. In accordance with JIS-Z8807-1976, a solid specific gravity D2 of this coating was obtained, and the percentage shrinkage during curing was determined using the equation below.

$$\text{Percentage shrinkage during curing (\%)} = [(D2 - D1) / D2] \times 100$$

Example 2-2

A three-dimensional model was formed in the same manner as in Example 2-1 and evaluated except that

Polymerizable compound: PEG300 diacrylate 20 g
was used instead of
Polymerizable compound: KAYARAD DPCA60 10 g and
Polymerizable compound: IBOA 10 g.

Example 2-3

A three-dimensional model was formed in the same manner as in Example 2-1 and evaluated except that

Polymerizable compound: modified bisphenol A epoxy acrylate 20 g
was used instead of
Polymerizable compound: KAYARAD DPCA60 10 g and
Polymerizable compound: IBOA 10 g.

Example 2-4

A three-dimensional model was formed in the same manner as in Example 2-1 and evaluated except that

| | |
|---|---|
| Polymerizable compound: IBOA | 10 g and |
| Polymerizable compound: aliphatic urethane acrylate | 10 g |
| were used instead of | |
| Polymerizable compound: KAYARAD DPCA60 | 10 g and |
| Polymerizable compound: IBOA | 10 g. |

The above-mentioned aliphatic urethane acrylate had the chemical structure below.

$$CH_2=C(CH_3)COO(EO)_4\text{-HDI-}(EO)_4OOC(CH_3)C=CH_2$$

In this formula, EO is ethylene oxide, and HDI is hexamethylene diisocyanate.

Example 2-5

A three-dimensional model was formed in the same manner as in Example 2-1 and evaluated except that

| | |
|---|---|
| Polymerizable compound: oxetane compound | 20 g and |
| Photopolymerization initiator: triphenylsulfonium hexafluoroammonate | 1.0 g |
| were used instead of | |
| Polymerizable compound: KAYARAD DPCA60 | 10 g, |
| Polymerizable compound: IBOA | 10 g, and |
| Photopolymerization initiator: | 0.5 g. |

The oxetane compound had the structural formula below.

Chem. 28

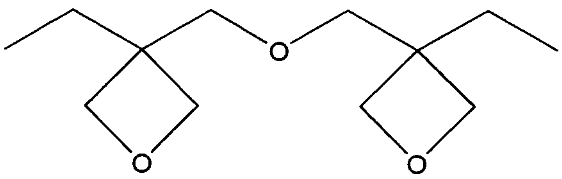

Comparative Example 2-1

A three-dimensional model was formed in the same manner as in Example 2-1 and evaluated except that

| | |
|---|---|
| Polymerizable compound: TMPTA | 20 g |
| was used instead of | |
| Polymerizable compound: KAYARAD DPCA60 | 10 g and |
| Polymerizable compound: IBOA | 10 g. |

Comparative Example 2-2

A three-dimensional model was formed in the same manner as in Example 2-1 and evaluated except that

| | |
|---|---|
| Polymerizable compound: TMPEOTA | 20 g |
| was used instead of | |
| Polymerizable compound: KAYARAD DPCA60 | 10 g and |
| Polymerizable compound: IBOA | 10 g. |

The results for the above are summarized in Table 4 below.

Table 4

| No. | Polymerizable compound | Percentage shrinkage (%) | Shape precision | Texture |
|---|---|---|---|---|
| Ex. 2-1 | Hexafunctional acrylate used in combination | 7.1 | A | A |
| Ex. 2-2 | Difunctional acrylate | 9.0 | A | A |
| Ex. 2-3 | Epoxy acrylate | 8.7 | A | A |
| Ex. 2-4 | Urethane acrylate | 3.0 | A | A |
| Ex. 2-5 | Oxetane compound | 3.0 | A | A |
| Comp. Ex. 2-1 | TMPTA | 25.0 | B | B |
| Comp. Ex. 2-2 | TMPEOTA | 20.2 | B | B |

The shape precision was ranked as follows by measuring the length of a molding and comparing it with a designed dimension.

Shape precision

A: Dimensional error less than 0.10%.
C: Dimensional error equal to or greater than 0.10%.

A sensory evaluation of the texture was carried out, and was ranked as follows.

Texture

A: Good
B: Fair
C: Poor

The percentage shrinkage was measured as described in the 'Disclosure of the Invention' section.

Example 3-1

| Preparation of UV-curing binder 'colorless binder' | |
|---|---|
| Polymerizable compound: DPHA | 5 g |
| Polymerizable compound: IBOA | 15 g |
| Photopolymerization initiator: acylphosphine oxide compound (compound example (2)) | 0.6 g |

The above components were stirred and mixed to give a colorless binder.

| Preparation of UV-curing binder 'white binder' | |
|---|---|
| Polymerizable compound: DPHA | 5 g |
| Polymerizable compound: IBOA | 15 g |
| Photopolymerization initiator: acylphosphine oxide compound (compound example (2)) | 0.6 g |
| White pigment: titanium oxide | 3 g |

The above components were kneaded using a three roll mill to give a white binder.

| Preparation of UV-curing binder 'yellow binder' | |
|---|---|
| Polymerizable compound: DPHA | 10 g |
| Polymerizable compound: IBOA | 10 g |
| Photopolymerization initiator: acylphosphine oxide compound (compound example (2)) | 0.5 g |
| Colorant: Y-1 | 0.8 g |

Y-1 above, and M-1 and C-1 below were as described in the 'Disclosure of the Invention' section.
The above components were stirred and mixed to give a yellow binder.

| Preparation of UV-curing binder 'magenta binder' | |
|---|---|
| Polymerizable compound: DPHA | 5 g |
| Polymerizable compound: IBOA | 15 g |
| Photopolymerization initiator: acylphosphine oxide compound (compound example (2)) | 0.5 g |
| Colorant: M-1 | 0.8 g |

The above components were stirred and mixed to give a magenta binder.

| Preparation of UV-curing binder 'cyan binder' | |
|---|---|
| Polymerizable compound: DPHA | 5 g |
| Polymerizable compound: IBOA | 15 g |
| Photopolymerization initiator: acylphosphine oxide compound (compound example (2)) | 0.5 g |
| Colorant: C-1 | 0.8 g |

The above components were stirred and mixed to give a cyan binder.

| Preparation of UV-curing binder 'black binder' | | |
|---|---|---|
| Polymerizable compound: DPHA | 5 g | |
| Polymerizable compound: IBOA | | 15 g |
| Photopolymerization initiator: acylphosphine oxide compound (compound example (2)) | | 0.5 g |
| Colorant: | Y-1 | 0.3 g |
| | M-1 | 0.2 g |
| | C-1 | 0.4g |

The above components were stirred and mixed to give a black binder.

Formation of three-dimensional model

A three-dimensional model was formed in the same manner as in Example 1-1. The powder material surface was exposed to energy at 30 $mJ/cm^2$ using a high-pressure mercury lamp.

Evaluation method

A cubic model having a length, width, and height all of 3 cm was used as a reference.
A sensory evaluation of the smoothness of the surface was carried out by touching by hand and used as a reference for the texture.

Example 3-2

A three-dimensional model was formed in the same manner as in Example 3-1 and evaluated except that as a polymerization initiator Acylphosphine oxide compound (compound example (4)) was used instead of Acylphosphine oxide compound (compound example (2)).

Example 3-3

A three-dimensional model was formed in the same manner as in Example 3-1 and evaluated except that as a polymerization initiator acylphosphine oxide compound (compound example (19)) was used instead of acylphosphine oxide compound (compound example (2)).

Example 3-4

A three-dimensional model was formed in the same manner as in Example 3-1 and evaluated except that as a polymerization initiator a 1:1 mixture of an acylphosphine oxide compound (compound example (22)) and 1-hydroxycyclohexyl phenyl ketone was used instead of acylphosphine oxide compound (compound example (2)).

The results from the above are summarized in Table 5 below.

Table 5

| No. | Polymerization initiator | Curability | Texture |
|---|---|---|---|
| Ex. 3-1 | Compound example (2) LUCIRIN TPO | A | A |
| Ex. 3-2 | Compound example (4) LUCIRIN TPO-L | A | A |
| Ex. 3-3 | Compound example (19) Irgacure 819 | A | A |
| Ex. 3-4 | Compound example (22) Irgacure 1850 | A | A |

With regard to the curability, a sensory evaluation of the tackiness of the surface of a molding obtained was carried out.

Curability

A: No tackiness.
C: Tacky.

A sensory evaluation of the texture was carried out, and ranked as follows.

Texture

A: Good
C: Poor

Example 4-1

| Preparation of UV-curinq binder 'magenta binder' | |
|---|---|
| Polymerizable compound: KAYARAD DPCA60 | 6.0 g |
| Polymerizable compound: HDDA | 14.0 g |
| Photopolymerization initiator: 1-hydroxycyclohexyl phenyl ketone | 0.5 g |
| colorant: a-21 | 0.3 g |

The above components were stirred and mixed to give a magenta binder.

Formation of three-dimensional model

As a powder material, polymethyl methacrylate (MB20X-5; average particle size 5 μm, manufactured by Sekisui

Plastics Co., Ltd.) was laid using a rod as one powder material layer having a thickness of about 80 μm, and a colored binder was then discharged from an inkjet discharge nozzle as appropriate based on data.

Liquid droplets were discharged by an inkjet system employing the UV-curing binder as an ink at a resolution of 600 dpi (dot gap about 42 μm) so as to make dots form a continuous line, while adjusting the amount of ink as necessary for a portion where strength was required.

The surface of the powder material was exposed to energy at 100 mJ/cm$^2$ using a high-pressure mercury lamp.

Subsequently, a powder forming layer having a thickness corresponding to 1 slice pitch was further formed, the binder was supplied so as to match the required cross-sectional shape, and by repeating this a three-dimensional model was formed.

Example 4-2

A three-dimensional model was formed in the same manner as in Example 4-1 and evaluated except that as a colorant
M-4
was used instead of
a-21.

Example 4-3

A three-dimensional model was formed in the same manner as in Example 4-1 and evaluated except that as a colorant
M-6
was used instead of
a-21.

Example 4-4

A three-dimensional model was formed in the same manner as in Example 4-1 and evaluated except that as a colorant
M-0
was used instead of
a-21.

Example 5-1

| Preparation of UV-curing binder 'cyan binder' | |
|---|---|
| Polymerizable compound: M350 | 10.0 g |
| Polymerizable compound: IBOA | 10.0 g |
| Photopolymerization initiator: 2-hydroxy-2-methylpropiophenone | 0.3 g |
| Colorant: AII-17 | 0.3 g |

The above components were stirred and mixed to give a cyan binder.

Example 5-2

A three-dimensional model was formed in the same manner as in Example 5-1 and evaluated except that as a colorant
AII-21
was used instead of
AII-17.

Example 5-3

A three-dimensional model was formed in the same manner as in Example 5-1 and evaluated except that as a colorant DD-2 having the structure below was used instead of AII-17.

The results from the above are summarized in Table 6 below.

Chem. 29

DD-2

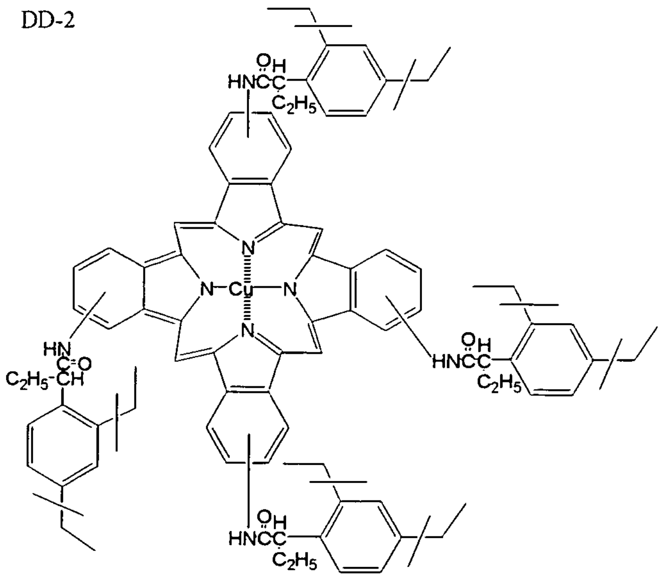

Table 6

| No. | Dye | Oxidation potential (V) | Discharge properties | Curability | Texture |
|---|---|---|---|---|---|
| Ex. 4-1 | a-21 | 1.43 | A | A | A |
| Ex. 4-2 | M-4 | 1.06 | A | A | A |
| Ex. 4-3 | M-6 | 1.22 | A | A | A |
| Ex. 4-4 | M0 | < 1.0 | A | B | B |
| Ex. 5-1 | AII-17 | 1.15 | A | A | A |
| Ex. 5-2 | AII-21 | 1.27 | A | A | A |
| Ex. 5-3 | DD-2 | 0.75 | A | B | B |

The inkjet discharge properties were ranked as follows.

Inkjet discharge properties

A: Discharged in a normal manner.
C: Clogging occurred, and could not be discharged.

With regard to the curability, a sensory evaluation of tackiness of the surface of a molding obtained was carried out.

Curability

A: No tackiness.
B: Slightly tacky.
C: Tacky.

A sensory evaluation of the texture was carried out, and ranked as follows.

Texture

A: Good
B: Fair
C: Poor

## Claims

1. A process for producing a three-dimensional model, the process comprising:

   a step (layer formation step) of forming above a support a layer of a powder material, the layer having a predetermined thickness;
   a step (cross-sectional shape formation step) of imagewise bonding the powder material layer by a binder according to sliced cross-sectional data of a modeled object so as to give a cross-sectional shape; and
   sequentially repeating the above steps;
   the binder having a viscosity at 25°C of 5 to 100 mPa·s.

2. The process for producing a three-dimensional model according to Claim 1, wherein the binder has a percentage volume shrinkage during curing of equal to or less than 15%.

3. The process for producing a three-dimensional model according to either Claim 1 or 2, wherein the binder and/or the powder material comprises an acylphosphine oxide compound.

4. The process for producing a three-dimensional model according to any one of Claims 1 to 3, wherein the binder, which is colored, comprises a polymerizable compound and an oil-soluble dye.

5. The process for producing a three-dimensional model according to any one of Claims 1 to 4, wherein the binder is cured by the application of light energy.

6. The process for producing a three-dimensional model according to any one of Claims 1 to 5, wherein the oil-soluble dye has an oxidation potential of equal to or greater than 1.0 V (SCE).

7. The process for producing a three-dimensional model according to any one of Claims 1 to 6, wherein the binder employs two or more types of binders selected from the group consisting of at least one colored binder, a white-colored binder, and a colorless binder.

8. The process for producing a three-dimensional model according to any one of Claims 1 to 7, wherein the colored binder comprises at least two binders selected from the group consisting of a yellow binder, a magenta binder, a cyan binder, and a black binder.

9. The process for producing a three-dimensional model according to any one of Claims 1 to 8, wherein the binder comprises a monofunctional acrylate and/or a difunctional acrylate.

10. The process for producing a three-dimensional model according to any one of Claims 1 to 9, wherein the binder comprises

(a) at least one type of tri- or higher-functional (meth)acrylate, and
(b) at least one type of monofunctional and/or difunctional (meth)acrylate.

**11.** The process for producing a three-dimensional model according to any one of Claims 1 to 10, wherein the binder comprises an epoxy acrylate and/or a urethane acrylate.

**12.** The process for producing a three-dimensional model according to any one of Claims 1 to 11, wherein the binder is cationically polymerizable.

**13.** The process for producing a three-dimensional model according to any one of Claims 1 to 12, wherein as a viscosity adjusting agent for the binder, an organic solvent having a boiling point of no greater than 150°C is used.

FIG.1

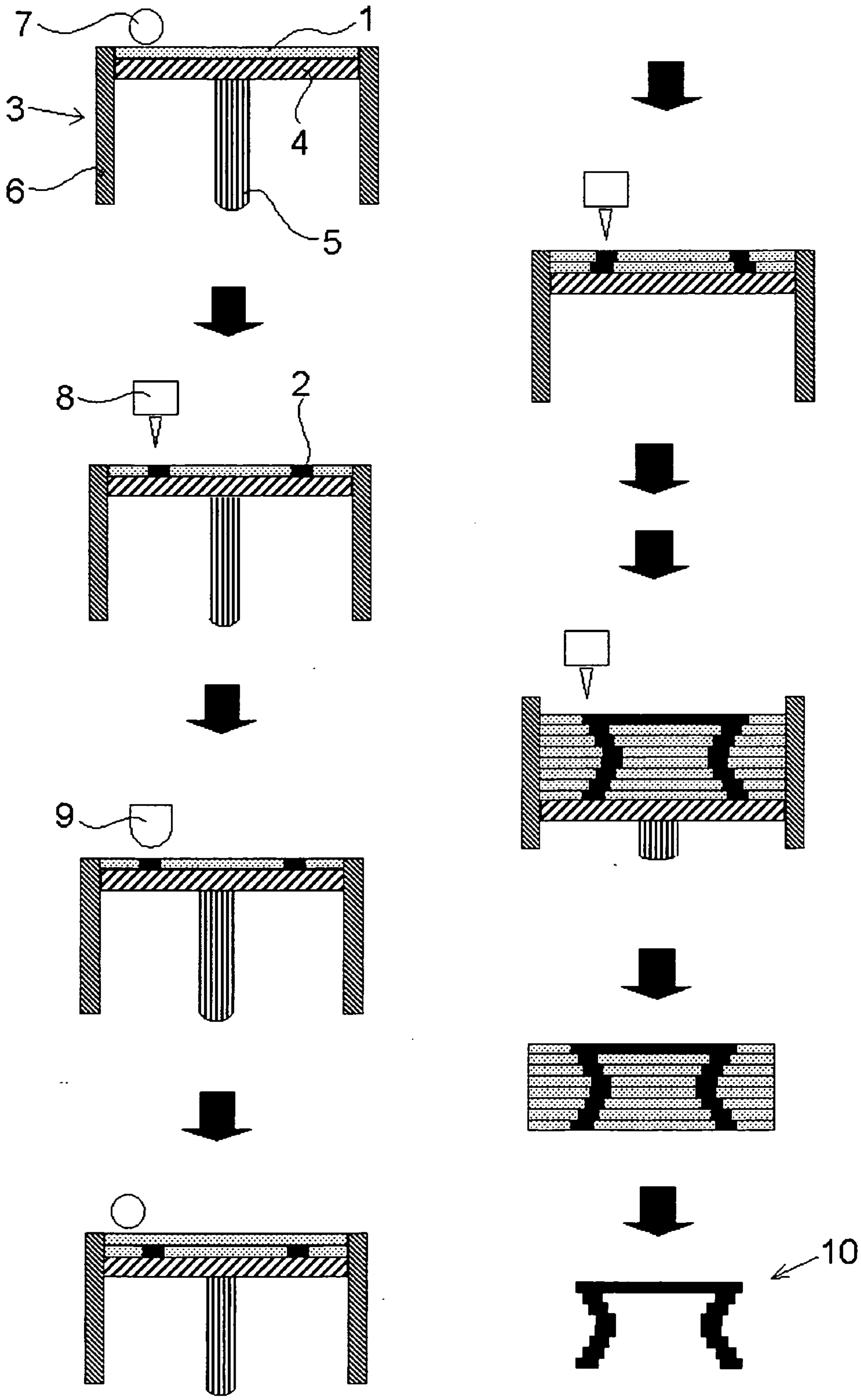

*FIG. 2*

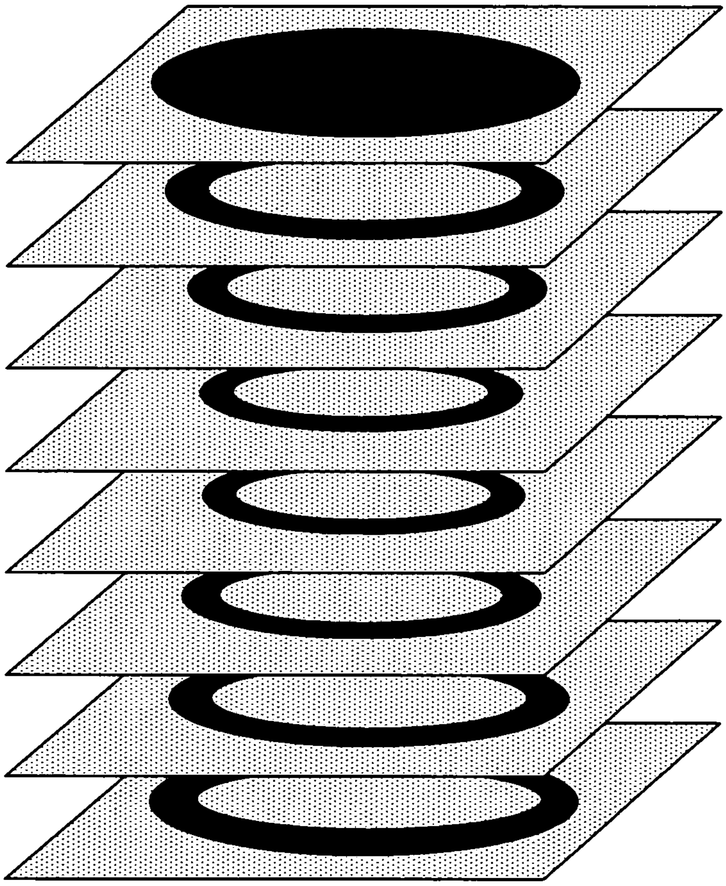

**INTERNATIONAL SEARCH REPORT**

International application No.
PCT/JP2004/011767

A. CLASSIFICATION OF SUBJECT MATTER
Int.Cl[7] B29C67/00

According to International Patent Classification (IPC) or to both national classification and IPC

B. FIELDS SEARCHED

Minimum documentation searched (classification system followed by classification symbols)
Int.Cl[7] B29C67/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2001/078969 A (Z COPR.), 25 October, 2001 (25.10.01), Full text & US 2001/0050031 A1 & JP 2003-531220 A | 1-13 |
| A | JP 2000-280356 A (Minolta Co., Ltd.), 10 October, 2000 (10.10.00), Full text & US 2002/0167101 A1 | 1-13 |
| A | JP 2002-292750 A (Minolta Co., Ltd.), 09 October, 2002 (09.10.02), Full text & US 2002/0105114 A1 | 1-13 |

☒ Further documents are listed in the continuation of Box C.  ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 16 November, 2004 (16.11.04) | 07 December, 2004 (07.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/011767

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-150556 A (Minolta Co., Ltd.), 05 June, 2001 (05.06.01), Full text (Family: none) | 1-13 |

Form PCT/ISA/210 (continuation of second sheet) (January 2004)